# EUROPÄISCHE PATENTSCHRIFT

(11) **EP 3 642 089 B1**
(45) Veröffentlichungstag und Bekanntmachung des Hinweises auf die Patenterteilung: **03.04.2024**
(21) Anmeldenummer: 18730995.0
(22) Anmeldetag: 01.06.2018
(51) Int. Cl.: B60T 8/88

(54) **ELEKTRISCHE AUSRÜSTUNG EINES FAHRZEUGS ODER EINER FAHRZEUGKOMBINATION AUS EINEM ZUGFAHRZEUG UND WENIGSTENS EINEM ANHÄNGERFAHRZEUG**
ELECTRICAL EQUIPMENT OF A VEHICLE OR A VEHICLE COMBINATION CONSISTING OF A TOWING VEHICLE AND AT LEAST ONE TRAILER VEHICLE
ÉQUIPEMENT ÉLECTRIQUE POUR UN VÉHICULE OU UNE COMBINAISON DE VÉHICULES COMPRENANT UN VÉHICULE TRACTEUR ET AU MOINS UN VÉHICULE TRACTÉ

(30) Priorität: 19.06.2017 DE 102017113336
(43) Veröffentlichungstag der Anmeldung: 29.04.2020
(73) Patentinhaber: KNORR-BREMSE Systeme für Nutzfahrzeuge GmbH, 80809 München (DE)
(72) Erfinder: HECKER, Falk, 71706 Markgröningen (DE); MUSTAPHA, Adnan, 75433 Maulbronn (DE); JUNDT, Oliver, 74394 Hessigheim (DE); HUMMEL, Stefan, 70191 Stuttgart (DE); WEIS, Rüdiger, 70469 Stuttgart (DE)
(86) Internationale Anmeldenummer: PCT/EP2018/064472
(87) Internationale Veröffentlichungsnummer: WO 2018/234012

(56) Entgegenhaltungen:
- EP-A1- 2 719 593
- WO-A1-00/09376
- WO-A1-03/076244
- DE-A1-102015 209 565

## Beschreibung

Die Erfindung betrifft eine elektrische Ausrüstung eines Fahrzeugs oder einer Fahrzeugkombination aus einem Zugfahrzeug und wenigstens einem Anhängerfahrzeug gemäß dem Oberbegriff von Anspruch 1.

Eine elektrische Ausrüstung eines Fahrzeugs ist aus EP 0 999 117 A2 bekannt. Dabei ist vorgesehen, dass im Fehlerfall einer Lenksystemkomponente, insbesondere eines Lenkstellers, gezielt einzelne Räder zur Aufrechterhaltung der Lenkbarkeit des Fahrzeugs eingebremst werden. Dadurch wird die Fehlertoleranz bei einem Ausfall einer Lenksystemkomponente dadurch verbessert, dass versucht wird, die ausgefallene Lenkwirkung der betreffenden Lenksystemkomponente durch Erzeugung eines Giermoments mittels gezielten Bremsens einzelner Räder wenigstens teilweise zu ersetzen. Um die Ausfallsicherheit zu erhöhen, ist die Stromversorgung der kombinierten Brems- und Lenkeinrichtung in Form einer weiteren Fahrzeugbatterie redundant. Weiterhin verfügen auch Radmodule, in welchen Brems- und Lenkaktuatoren untergebracht sind, über jeweils einen eigenen Energiespeicher. Dabei sind die elektronische Lenk- und Bremssteuerung sowie die Energiequelle vollständig redundant ausgelegt, d.h. alle elektronischen Systemkomponenten sowie die Energiequelle sind jeweils mindestens doppelt vorhanden. Dadurch kann bei Ausfall einer elektronischen Systemkomponente bzw. Energiequelle die jeweils noch intakte Systemkomponente bzw. Energiequelle die angeforderte Funktion vollständig übernehmen.

Ein Nachteil dieser Systemauslegung besteht in der relativ aufwändigen Installation und den hohen Komponenten- und Systemkosten. Dadurch sind derartige Konzepte nur bedingt serientauglich. Außerdem muss dabei sichergestellt werden, dass keine Fehler in den redundanten Systemen gleichzeitig auftreten. Die Lenk- und Bremseingaben für die elektrische Brems- und Lenkeinrichtung werden außerdem durch den Fahrer erzeugt.

Andererseits existieren zum Teil seit geraumer Zeit Fahrerassistenzsysteme wie Antriebsschlupfregelung (ASR), Notbremsassistent (AEBS), Abstandsfolgereglung (ACC) oder Fahrdynamikregelung (ESP), mit deren Hilfe Bremseingriffe automatisch und unabhängig vom Fahrer erfolgen können, um Sicherheitsvorgaben wie z.B. einen gewissen Mindestabstand zu einem voraus fahrenden Fahrzeug, eine gewisse Mindestbremswirkung sowie eine gewisse Mindestfahrstabilität zu gewährleisten. Für den zukünftigen Fahrzeugverkehr sind außerdem Konzepte geplant, die es ermöglichen, Fahrzeuge im öffentlichen Straßenverkehr auch völlig ohne Fahrereingriff im Sinne eines "Autopiloten" zu bewegen. Dabei sollen mehrere Fahrzeuge automatisch gesteuert mit einem Abstand hintereinanderfahren, der geringer als ein eigentlich vorgeschriebener Sicherheitsabstand ist (Platooning). Dies ist nur möglich, wenn durch geeignete Kommunikation zwischen den Fahrzeugen alle gleichzeitig und mit gleicher Verzögerung bremsen können.

Im Rahmen von solchen (teil-)autonomen Fahrzeugkonzepten ist es daher nötig, dass die elektrische Bremseinrichtung Bremsanforderungen auf elektronischem Wege erhalten und umsetzen kann und zwar auch dann, wenn ein Fehler innerhalb der elektronischen Steuerungen oder Elektrik vorliegt. Daher wird eine fehlertolerante Steuerung der Bremseinrichtung benötigt, so dass beim Auftreten von Fehlern im Bremssystem die Kernfunktion Bremsen auch ohne Fahrer(eingriff) mindestens über eine gewisse Zeit sichergestellt werden kann bis ein sicherer Systemzustand erreicht ist, beispielsweise zumindest ein Stillstand des Fahrzeugs oder ein geparkter Zustand mit dauerhaft zugespannten Bremsen.

Bei bisher in Serie gebauten, elektronischen oder elektronisch bremsdruckgeregelten Bremssystemen (EBS) schaltet deren elektronische Bremssteuereinrichtung beim Auftreten eines Fehlers in dem elektrischen Betriebsbremskreis (z.B. Ausfall der elektrischen Energiequelle oder der elektronischen Bremssteuereinrichtung selbst) ab und auf eine rein pneumatische Backup-Steuerung durch den wenigstens einen pneumatischen Betriebsbremskreis um, mit der allerdings lediglich der Fahrer das Fahrzeug durch eine Betätigung des Betriebsbremsbetätigungsorgans einbremsen kann. Ein solches System ist für ein oben beschriebenes (teil-)autonomes oder automatisiertes Fahren (Autopilot) nicht geeignet, da bei Auftreten eines solchen Fehlers keine automatisiert gesteuerten Bremseingriffe mehr möglich sind.

Eine weitere elektrische Ausrüstung ist aus DE 10 2014 013 756 B3 bekannt, wobei die elektrische Ausrüstung eine durch eine elektronische Bremssteuereinrichtung elektrisch steuerbare und druckmittelbetätigte Betriebsbremseinrichtung und ein Fahrerassistenzsystem oder eine Autopiloteinrichtung beinhaltet, welches oder welche die Betriebsbremseinrichtung unabhängig vom Fahrer gemäß einer Bremswirkungsvorgabe automatisch steuert oder regelt, wobei in die elektronische Bremssteuereinrichtung wenigstens eine Bremsschlupfregelung integriert ist, und wobei die elektronische Bremssteuereinrichtung von einer ersten elektrischen Energiequelle mit elektrischer Energie versorgt ist, und wobei wenigstens eine gegenüber der elektronischen Bremssteuereinrichtung zusätzliche elektronische Steuereinrichtung vorgesehen ist, welche von einer zweiten, von der ersten elektrischen Energiequelle der elektronischen Bremssteuereinrichtung unabhängigen elektrische Energiequelle mit elektrischer Energie versorgt ist und welche eine Magnetventileinrichtung steuert, über welche Bremsdruck in Radbremsaktuatoren einsteuerbar ist, und wobei bei einem festgestellten Fehler oder Ausfall der ersten elektrischen Energiequelle und/oder der elektronischen Bremssteuereinrichtung die zusätzliche elektronische Steuereinrichtung von dem Fahrerassistenzsystem oder von der Autopiloteinrichtung gemäß der Bremswirkungsvorgabe angesteuert wird, um eine redundant ausgelöste Abbremsung des in Fahrt befindlichen Fahrzeugs oder der in Fahrt befindlichen Fahrzeugkombination durch Einsteuern von Bremsdruck in die Radbremsaktuatoren durchzuführen. Diese redundant ausgelöste Abbremsung erfolgt jedoch ohne Bremsschlupfregelung (ABS), wodurch sich vor allem bei Fahrbahnen mit geringem Reibwert ein relativ langer Bremsweg ergibt.

Eine gattungsgemäße elektrische Ausrüstung ist aus EP 2 719 593 A1 bekannt, welche zwei Bremskreise umfasst. Dort werden alle Sensoren, nämlich ein Drucksensor, Raddrehzahlsensoren und ESP-Sensoren durch zwei elektrische Energiequellen mit elektrischer Energie versorgt. Damit wird das Problem gelöst, dass auch bei einem Ausfall einer Energieversorgung oder eines Bremskreises noch eine Bremsschlupfregelung möglich ist.

Hiervon ausgehend besteht die Aufgabe der Erfindung darin, eine elektrische Ausrüstung eines Fahrzeugs derart weiter zu bilden, dass die redundant ausgelöste Abbremsung mit möglichst geringem Bremsweg erfolgen kann, ohne dass jedoch hierzu ein großer Aufwand betrieben werden muss. Weiterhin soll auch ein Fahrzeug mit einer solchen elektrischen Ausrüstung zur Verfügung gestellt werden.

Diese Aufgabe wird durch die Merkmale der Patentansprüche 1 und 17 gelöst.

### Offenbarung der Erfindung

Die Erfindung geht aus von einer elektrischen Ausrüstung eines Fahrzeugs oder einer Fahrzeugkombination aus einem Zugfahrzeug und wenigstens einem Anhängerfahrzeug, wobei die elektrische Ausrüstung eine durch eine elektronische Bremssteuereinrichtung elektrisch steuerbare und druckmittelbetätigte Betriebsbremseinrichtung und ein Fahrerassistenzsystem oder eine Autopiloteinrichtung beinhaltet, welches oder welche die Betriebsbremseinrichtung unabhängig vom Fahrer gemäß einer Bremswirkungsvorgabe automatisch steuert oder regelt, wobei in die elektronische Bremssteuereinrichtung wenigstens eine Bremsschlupfregelung integriert ist, und wobei die elektronische Bremssteuereinrichtung von einer ersten elektrischen Energiequelle mit elektrischer Energie versorgt ist, und wobei wenigstens eine gegenüber der elektronischen Bremssteuereinrichtung zusätzliche elektronische Steuereinrichtung vorgesehen ist, welche von einer zweiten, von der ersten elektrischen Energiequelle der elektronischen Bremssteuereinrichtung unabhängigen elektrische Energiequelle mit elektrischer Energie versorgt ist und welche eine Magnetventileinrichtung steuert, über welche Bremsdruck in Radbremsaktuatoren einsteuerbar ist, und wobei wenigstens bei einem festgestellten Fehler oder Ausfall der ersten elektrischen Energiequelle und/oder der elektronischen Bremssteuereinrichtung die zusätzliche elektronische Steuereinrichtung von dem Fahrerassistenzsystem oder von der Autopiloteinrichtung gemäß der Bremswirkungsvorgabe angesteuert wird, um eine redundant ausgelöste Abbremsung des in Fahrt befindlichen Fahrzeugs oder der in Fahrt befindlichen Fahrzeugkombination durch Einsteuern von Bremsdruck in die Radbremsaktuatoren durchzuführen. Weiterhin ist eine von der zweiten elektrischen Energiequelle mit elektrischer Energie versorgte Sensoreinrichtung vorgesehen, mit deren Hilfe während der redundant ausgelösten Abbremsung ein übermäßiger Bremsschlupf detektierbar ist. Darüber hinaus ist die zusätzliche elektronische Steuereinrichtung weiterhin ausgebildet, dass wenn sie während der redundant ausgelösten Abbremsung einen übermäßigen Bremsschlupf detektiert hat, sie durch Ansteuern der Magnetventileinrichtung einen Bremsdruck in die Radbremsaktuatoren einsteuert, welcher einer Bremswirkung entspricht, die geringer als die Bremswirkungsvorgabe des Fahrerassistenzsystems oder der Autopiloteinrichtung ist. Insbesondere wird daher bei einem Auftreten von übermäßigem Bremsschlupf während der redundant ausgelösten Abbremsung ein Bremsdruck in die Radbremsaktuatoren einsteuert, der geringer ist als der Bremsdruck, welcher der Bremswirkungsvorgabe und insbesondere einer Bremsdruckvorgabe des Fahrerassistenzsystems oder der Autopiloteinrichtung entspricht.

Dabei stellt die zusätzliche elektronische Steuereinrichtung eine "zusätzliche" elektronische Steuereinrichtung in Bezug zur elektronischen Bremssteuereinrichtung dar, weil sie gesondert und zusätzlich in Bezug zu dieser vorhanden ist. Andererseits ist die zusätzliche elektronische Steuereinrichtung in der Betriebsbremsventileinrichtung keine zusätzliche Steuereinrichtung dar, weil sie dort nur einmal vorhanden ist.

Unter einer Autopiloteinrichtung soll im Folgenden eine Einrichtung verstanden werden, welche wenigstens die Bremseinrichtung des Fahrzeugs ohne Zutun des Fahrers steuert oder regelt, insbesondere in Abhängigkeit von Fahrbetriebsbedingungen. Dasselbe gilt auch für ein Fahrerassistenzsystem wie z.B. eine Abstandsfolgeregelung (ACC, Adaptive Cruise Control), durch welche der Abstand bzw. die Relativgeschwindigkeit zu einem vorausfahrenden Fahrzeug konstant gehalten wird, einen Notbremsassistenten (AEBS) oder eine Fahrdynamikregelung (ESP), mit deren Hilfe wenigstens Bremseingriffe automatisch und unabhängig vom Fahrer erfolgen, um Sicherheitsvorgaben wie z.B. einen gewissen Mindestabstand zu einem voraus fahrenden Fahrzeug, eine gewisse Mindestbremswirkung sowie eine gewisse Mindestfahrstabilität zu gewährleisten.

Unter einer Bremswirkungsvorgabe durch das Fahrerassistenzsystem oder die Autopiloteinrichtung ist eine Vorgabe einer beliebigen Sollgröße zu verstehen, beispielsweise eine Bremsdruckvorgabe oder eine Bremskraft- oder Bremsmomentvorgabe.

Die von der zusätzlichen elektronischen Steuereinrichtung auf die Bremswirkungsvorgabe des Fahrerassistenzsystems oder der Autopiloteinrichtung ausgelöste Abbremsung oder Bremsung des Fahrzeugs durch beispielsweise Belüften von pneumatischen Radbremszylindern ist eine redundante Abbremsung in dem Sinne, dass sie nicht mehr durch den elektrischen Betriebsbremskreis bzw. die elektronische Bremssteuereinrichtung ausgelöst werden kann, weil dort eben der Ausfall oder der Fehler vorliegt.

Bei einem Ausfall oder Fehler der ersten Energiequelle und/oder der elektronischen Bremssteuereinrichtung fallen neben den ABS-Regelalgorithmen in der Regel auch die ABS-Sensoren aus, mit welcher üblicherweise eine Bremsschlupfregelung betrieben wird, so dass dann die redundant ausgelöste Abbremsung eigentlich ohne eine solche Bremsschlupfregelung auskommen müsste. Die Erfindung hat nun jedoch einen Weg gefunden, um auch bei einer solchen redundant ausgelösten Abbremsung einen geringen Bremsweg mit geringem Aufwand an Redundanz zur Verfügung zu stellen.

Gemäß der Erfindung ist die Sensoreinrichtung von der üblichen ABS-Sensorik verschieden, die bedingt durch den Fehler oder Ausfall nicht mehr funktionsfähig ist. Diese Sensoreinrichtung beinhaltet Sensoren, welche in der Regel bereits bei modernen Fahrzeugen vorhanden sind und daher nicht mehr zusätzlich vorgesehen werden müssen und kann verschiedene Varianten aufweisen.

Die Sensoreinrichtung ist bevorzugt an einen Datenbus angeschlossen, an welchen auch die zusätzliche elektronische Steuereinrichtung und auch die elektronische Bremssteuereinrichtung angeschlossen sind, damit Sensordaten der Sensoreinrichtung, wie sie weiter unter näher beschrieben werden in die zusätzliche elektronische Steuereinrichtung eingesteuert werden können.

Gemäß einer ersten Variante weist die Sensoreinrichtung wenigstens einen ersten Sensor auf, welcher ein die Längsbeschleunigung oder Längsverzögerung des Fahrzeugs oder der Fahrzeugkombination repräsentierenden ersten Wert in die zusätzliche elektronische Steuereinrichtung einsteuert sowie wenigstens einen zweiten Sensor, welcher ein den Bremsdruck repräsentierenden zweiten Wert in die zusätzliche elektronische Steuereinrichtung einsteuert, wobei die zusätzliche elektronische Steuereinrichtung ausgebildet ist, dass sie während der redundant ausgelösten Abbremsung einen übermäßigen Bremsschlupf bei Vorliegen einer eine erlaubte oder vorgegebene Abweichung übersteigenden Abweichung einer Relation, eines Verhältnisses oder eines Zusammenhangs zwischen dem ersten Wert und dem zweiten Wert von einer erwarteten oder vorgegebenen Relation, von einem erwarteten oder vorgegebenen Verhältnis oder von einem erwarteten oder vorgegebenen Zusammenhang zwischen dem ersten Wert und dem zweiten Wert detektiert. Dabei kann beispielsweise der erste Sensor beispielsweise einen Längsbeschleunigungssensor und der zweite Sensor einen Drucksensor beinhalten. Bei der ersten Variante wird daher eine vorhandene Korrelation aus dem in die Radbremsaktuatoren eingesteuertem Bremsdruck und der hieraus resultierenden Fahrzeuglängsbeschleunigung genutzt, um unzulässiges Bremsblockieren der Räder zu erkennen. Physikalischer Hintergrund dabei ist, das sich bei nicht blockierenden Rädern die Größen Bremsdruck und Fahrzeuglängsverzögerung nahezu proportional verhalten, bei bremsblockierenden Rädern jedoch nicht mehr, da dann trotz steigendem Bremsdruck die Fahrzeuglängsverzögerung konstant bleibt oder sogar etwas reduziert wird. Die Korrelation bzw. der Proportionalitätsfaktor zwischen den beiden Größen wird wenigstens durch die Masse des Fahrzeugs oder der Fahrzeugkombination gebildet.

Gemäß einer zweiten Variante weist die Sensoreinrichtung wenigstens einen dritten Sensor, welcher ein die Ist-Drehzahl einer Getriebeausgangswelle eines Getriebes des Fahrzeugs oder der Fahrzeugkombination repräsentierenden dritten Wert in die zusätzliche elektronische Steuereinrichtung einsteuert und wenigstens einen vierten Sensor, welcher ein die Raddrehzahl wenigstens eines der nicht angetriebenen Räder des Fahrzeugs oder der Fahrzeugkombination repräsentierenden vierten Wert in die zusätzliche elektronische Steuereinrichtung einsteuert, wobei die zusätzliche elektronische Steuereinrichtung ausgebildet ist, dass sie während der redundant ausgelösten Abbremsung einen übermäßigen Bremsschlupf bei Vorliegen einer eine erlaubte Abweichung übersteigenden Abweichung einer Relation, eines Verhältnisses oder eines Zusammenhangs zwischen dem dritten Wert und dem vierten Wert von einer erwarteten oder vorgegebenen Relation, von einem erwarteten oder vorgegebenen Verhältnis oder von einem erwarteten oder vorgegebenen Zusammenhang zwischen dem dritten Wert und dem vierten Wert detektiert.

Die zweite Variante nutzt daher den normalerweise, d.h. bei nicht oder nur sehr gering vorhandenem Bremsblockieren festen Zusammenhang zwischen der Drehzahl einer Getriebeausgangswelle, welche dann angetriebene und gebremste Räder des Fahrzeugs oder des Zugfahrzeugs der Fahrzeugkombination antreibt und der Raddrehzahl wenigstens eines der nicht angetriebenen, aber gebremsten Räder des Fahrzeugs oder der Fahrzeugkombination. Wenn aber beispielsweise übermäßiges Bremsblockieren an der angetriebenen Achse auftritt, so sinkt die Drehzahl an der Getriebeausgangswelle ab, während sich die Raddrehzahl an einer nicht angetriebenen Achse z.B. aufgrund eines dort lokal höheren Reibwerts nicht reduziert. Folglich stellt eine signifikante Änderung des üblichen Zusammenhangs oder der üblichen Relation der beiden Größen ein Indiz für das Vorliegen von Bremsblockieren an der Hinterachse dar. Ein Bremsblockieren einer angetriebenen Hinterachse stellt gegenüber einem Bremsblockieren einer nicht angetriebenen Vorderachse den ungünstigeren Fall dar, weil in diesem Fall ein Fahrzeug zum Übersteuern neigt.

Gemäß einer dritten Variante weist die Sensoreinrichtung wenigstens einen fünften Sensor auf, welcher einen ein Bremsnicken des Fahrzeugs oder der Fahrzeugkombination repräsentierenden fünften Wert in die zusätzliche elektronische Steuereinrichtung einsteuert, sowie einen sechsten Sensor, welcher ein die Längsbeschleunigung oder Längsverzögerung des Fahrzeugs oder der Fahrzeugkombination repräsentierenden sechsten Wert in die zusätzliche elektronische Steuereinrichtung einsteuert, wobei die zusätzliche elektronische Steuereinrichtung ausgebildet ist, dass sie während der redundant ausgelösten Abbremsung einen übermäßigen Bremsschlupf bei Vorliegen einer eine erlaubte Abweichung übersteigenden Abweichung einer Relation, eines Verhältnisses oder eines Zusammenhangs zwischen dem fünften Wert und dem sechsten Wert von einer erwarteten oder vorgegebenen Relation, von einem erwarteten oder vorgegebenen Verhältnis oder von einem erwarteten oder vorgegebenen Zusammenhang zwischen dem fünften Wert und dem sechsten Wert detektiert. Dabei kann der fünfte Sensor beispielsweise einen eine Einfederung des Fahrzeugs oder der Fahrzeugkombination direkt oder indirekt erfassenden Sensor beinhalten, insbesondere einen Radarsensor oder einen Kamerasensor, welcher die Nickbewegung des Fahrzeugs in Bezug auf die Umwelt als Referenz erkennen kann, weil diese sich in vertikaler Richtung nicht bewegt. Der sechste Sensor kann beispielsweise einen Längsbeschleunigungssensor beinhalten.

Der dritten Variante liegt der Gedanke zugrunde, dass bei einem übermäßigen Bremsblockieren Nickeffekte des Fahrzeugs wegen der dann geringeren Bremskräfte weniger ausgeprägt sind als bei geringem oder nicht auftretendem Bremsblockieren.

Gemäß einer vierten Variante weist die Sensoreinrichtung wenigstens einen siebten Sensor auf, welcher ein eine Ist-Lateralbewegung des Fahrzeugs oder der Fahrzeugkombination repräsentierenden siebten Wert in die zusätzliche elektronische Steuereinrichtung einsteuert, sowie wenigstens einen achten Sensor, welcher ein eine Soll-Lateralbewegung des Fahrzeugs oder der Fahrzeugkombination repräsentierenden achten Wert in die zusätzliche elektronische Steuereinrichtung einsteuert, wobei die zusätzliche elektronische Steuereinrichtung ausgebildet ist, dass sie während der redundant ausgelösten Abbremsung einen übermäßigen Bremsschlupf bei einem Überschreiten einer vorbestimmten Schwelle durch die Differenz zwischen dem siebten Wert und dem achten Wert detektiert. Dabei kann der siebte Sensor einen Kamerasensor und/oder einen Radarsensor und der achte Sensor einen Geschwindigkeitssensor und einen Lenkradwinkelsensor oder einen Lenkwinkelsensor beinhalten. Mit einem solchen Kamerasensor und/oder einen Radarsensor kann dann eine laterale Bewegung des Fahrzeugs oder des Fahrzeugzugs in Bezug zur Umgebung als Referenz festgestellt werden.

Der vierten Variante liegt der Gedanke zugrunde, dass bei einem übermäßigen Bremsblockieren laterale Fahrzeugbewegungen bei einer während der redundant ausgelösten Abbremsung eventuell vorliegenden Kurvenfahrt, welche dann beispielsweise durch einen bestimmten Schwimmwinkel und/oder Gierwinkel charakterisiert sind, oberhalb der Schwelle liegen, weil dann die Seitenführungskräfte der gebremsten Räder relativ gering sind und sich demzufolge auch größere Lateralbewegungen ergeben. Mit beispielsweise dem Lenkradwinkelsensor und/oder dem Lenkwinkelsensor wird demgegenüber die Soll-Lateralbewegung erfasst.

Mit Hilfe einer oder mehrerer der oben beschriebenen Varianten von Sensoreinrichtungen, welche nicht von einem Ausfall oder Fehler der ersten elektrischen Energiequelle oder der elektronischen Bremssteuereinrichtung betroffen sind, wird daher ein übermäßiges Bremsschlupfen während der redundant ausgelösten Abbremsung von der zusätzlichen elektronischen Steuereinrichtung detektiert, welche ebenfalls nicht von einem Ausfall oder Fehler der ersten elektrischen Energiequelle oder der elektronischen Bremssteuereinrichtung betroffen ist.

Durch diese Maßnahme wird übermäßiges Bremsblockieren ähnlich wie bei einem konventionellen, aber hier nicht mehr funktionsfähigen ABS beseitigt und bei einer während der redundant ausgelösten Abbremsung eventuell vorliegenden Kurvenfahrt die Seitenführungskräfte erhöht.

Wegen der von der ersten elektrischen Energiequelle unabhängigen zweiten elektrischen Energiequelle ergibt sich nicht zuletzt eine hohe Ausfallsicherheit der Betriebsbremseinrichtung.

Gemäß der Erfindung beinhaltet die Reduktion der Bremswirkung gegenüber der Bremswirkungsvorgabe einen Wechsel zwischen Reduzieren und Steigern des Bremsdrucks durch Ansteuern der Magnetventileinrichtung mittels der zusätzlichen elektronischen Steuereinrichtung. Mit anderen Worten findet ähnlich wie bei einem konventionellen ABS eine Modulation des Bremsdrucks beispielsweise durch zyklisches Steigern und Absenken des Bremsdrucks statt, wobei sich im zeitlichen Mittel gegenüber der Bremswirkungsvorgabe ein geringerer Bremsdruck ergibt.

Weiterhin erfindungsgemäß ist die zusätzliche elektronische Steuereinrichtung ausgebildet, dass sie im Rahmen eines ersten Erkennungsmodus einen ersten Wert für den Bremsdruck, bei welchem ein übermäßiger Bremsschlupf innerhalb des ersten Erkennungsmodus erstmals aufgetreten ist als ersten erkannten kritischen Bremsdruckwert speichert und dann durch Ansteuern der Magnetventileinrichtung in Zyklen den Bremsdruck lediglich bis zu dem ersten erkannten kritischen Bremsdruckwert steigert und dann wieder reduziert. Folglich "merkt" sich die zusätzliche elektronische Steuereinrichtung im Rahmen der Bremsdruckerhöhung den "Eck"-Bremsdruck, bei welchem dann ein übermäßiges Bremsblockieren erstmals aufgetreten ist. Weiterhin ist dieser erste Wert für den Bremsdruck geringer als der Bremsdruck, welcher der Bremswirkungsvorgabe des Fahrerassistenzsystems oder der Autopiloteinrichtung entspricht. Dieser erste Wert für den Bremsdruck stellt dann auch ein Maß für den gerade vorliegenden Reibwert der Fahrbahnoberfläche dar. Mit Hilfe des gespeicherten ersten Werts für den Bremsdruck kann dann die Geschwindigkeit der Bremsdruckanpassung gesteigert werden, indem dieser erste Wert für den Bremsdruck als neue Vorgabe für den Bremsdruck ausgesteuert wird.

Ebenfalls erfindungsgemäß ist die zusätzliche elektronische Steuereinrichtung ausgebildet, dass sie zeitlich nach dem ersten Erkennungsmodus wenigstens einen zweiten Erkennungsmodus durchführt, um einen zweiten Wert für den Bremsdruck, bei welchem ein übermäßiger Bremsschlupf erstmals innerhalb des zweiten Erkennungsmodus aufgetreten ist als zweiten erkannten kritischen Bremsdruckwert zu speichern und dann durch Ansteuern der Magnetventileinrichtung in Zyklen den Bremsdruck lediglich bis zu diesem zweiten erkannten kritischen Bremsdruckwert zu steigern und dann wieder zu reduzieren. Dies ist insbesondere dann vorteilhaft, wenn sich der Reibwert der Fahrbahn noch während der redundant ausgelösten Abbremsung nach einiger Zeit ändert, wobei diese Reibwertänderung dann durch den zweiten Wert für den Bremsdruck repräsentiert wird.

Die Unteransprüche enthalten die Erfindung weiterbildende Merkmale.

Bevorzugt kann die zusätzliche elektronische Steuereinrichtung ausgebildet sein, dass falls sie während der redundant ausgelösten Abbremsung einen übermäßigen Bremsschlupf durch Vorliegen einer eine erlaubte oder vorgegebene Abweichung übersteigenden Abweichung einer Relation, eines Verhältnisses oder eines Zusammenhangs zwischen dem ersten Wert und dem zweiten Wert von einer erwarteten oder vorgegebenen Relation, von einem erwarteten oder vorgegebenen Verhältnis oder von einem erwarteten oder vorgegebenen Zusammenhang zwischen dem ersten Wert und dem zweiten Wert detektiert, sie durch Ansteuern der Magnetventileinrichtung in einem zyklischen Wechsel den Bremsdruck zunächst so lange bis maximal entsprechend der Bremswirkungsvorgabe des Fahrerassistenzsystems erhöht, bis die Fahrzeugverzögerung nicht mehr weiter zunimmt und einen maximalen Wert angenommen hat und danach den Bremsdruck wieder verringert, bis die Fahrzeugverzögerung wieder abnimmt. Dann stellt der Bremsdruck, bei dem die Fahrzeugverzögerung nicht mehr weiter zunimmt und einen maximalen Wert angenommen hat eine Druck- oder Stabilitätsgrenze dar, bei welcher die Längsverzögerung "gesättigt" ist.

Weiterhin kann die zusätzliche elektronische Steuereinrichtung ausgebildet sein, dass sie während der redundant ausgelösten Abbremsung einen übermäßigen Bremsschlupf auch auf der Basis von Daten detektiert, welche bereits vor dem Auftreten des Fehlers oder Ausfalls an die zusätzliche elektronische Steuereinrichtung übermittelt und in einem Speicher gespeichert worden sind. Eine solche Übermittlung kann beispielsweise mittels eines Datenbusses vonstattengehen, an welchen die zusätzliche elektronische Steuereinrichtung wie auch Sensoren und/oder elektronische Steuereinrichtungen angeschlossen sind.

Dabei können die Daten wenigstens eine der folgenden Daten beinhalten: Die Masse des Fahrzeugs oder der Fahrzeugkombination, die Achslasten und/oder die Achslastverteilung des Fahrzeugs oder der Fahrzeugkombination, den Reibwert der von dem Fahrzeug oder der Fahrzeugkombination befahrenen Fahrbahn. Insbesondere kann dann die zusätzliche elektronische Steuereinrichtung ausgebildet sein, dass sie während der redundant ausgelösten Abbremsung den Bremsdruck abhängig von den Achslasten achsweise angepasst.

Bevorzugt kann die zusätzliche elektronische Steuereinrichtung auch ausgebildet sein, dass sie ein Vorhandensein einer eigenen Bremsschlupfregelung in einem an das Zugfahrzeug einer Fahrzeugkombination angekoppelten Anhängerfahrzeugs erkennt und in diesem Fall während der redundant ausgelösten Abbremsung die Bremsschlupfregelung des Anhängerfahrzeugs ebenfalls zum bremsschlupfgeregelten Abbremsen der Fahrzeugkombination heranzieht. Das Bremssteuergerät samt integrierter Bremsschlupfregelung des Anhängerfahrzeugs wird dann bevorzugt ebenfalls von der zweiten elektrischen Energiequelle mit elektrischer Energie versorgt. Dann kann während der redundant ausgelösten Abbremsung beispielsweise wenigstens ein Anteil der Gesamtbremskraft von der Bremsanlage des Anhängerfahrzeugs übernommen werden. Durch diese Maßnahme wird der Bremsweg vorteilhaft weiter reduziert.

Gemäß einer Weiterbildung kann die zusätzliche elektronische Steuereinrichtung ausgebildet sein, dass sie während der redundant ausgelösten Abbremsung zusätzlich eine Aktivierung eines Retarders und/oder eine Reduzierung der Antriebsleistung eines Antriebsmotors des Fahrzeugs oder des Zugfahrzeugs der Fahrzeugkombination durchführt. Auch diese Maßnahme führt zu einer vorteilhaft weiteren Reduktion des Bremswegs.

Gemäß einer weiteren Maßnahme kann die elektronische Bremssteuereinrichtung ausgebildet sein, dass sie durch Eigenüberwachung ein Auftreten eines sie selbst betreffenden Fehlers oder eines sie selbst betreffenden Ausfalls und/oder ein Auftreten eines Fehler oder eines Ausfall der ersten elektrischen Energiequelle erkennt und an die zusätzliche elektronische Steuereinrichtung meldet, oder die zusätzliche elektronische Steuereinrichtung kann ausgebildet sein, dass sie ein Auftreten eines Fehler oder eines Ausfalls der ersten elektrischen Energiequelle und/oder der elektronischen Bremssteuereinrichtung erkennt, oder auch eine weitere, von der elektronischen Bremssteuereinrichtung und von der zusätzlichen elektronischen Steuereinrichtung verschiedene Elektronik kann ausgebildet sein, dass sie ein Auftreten eines Fehler oder eines Ausfalls der ersten elektrischen Energiequelle und/oder der elektronische Bremssteuereinrichtung erkennt und an die zusätzliche elektronische Steuereinrichtung meldet. Aufgrund der Meldung löst dann die zusätzliche elektronische Steuereinrichtung redundante Abbremsung aus.

Besonders bevorzugt ist als Betriebsbremseinrichtung eine elektropneumatische Betriebsbremseinrichtung, insbesondere ein elektronisches oder elektronisch bremsdruckgeregeltes Bremssystem vorgesehen, welches eine elektropneumatische Betriebsbremsventileinrichtung, die elektronische Bremssteuereinrichtung, elektropneumatische Modulatoren sowie pneumatische Radbremsaktuatoren beinhaltet, wobei die elektronische Bremssteuereinrichtung die elektropneumatischen Modulatoren elektrisch steuert, um pneumatische Bremsdrücke oder Bremssteuerdrücke für pneumatische Radbremsaktuatoren radindividuell, achsindividuell oder seitenindividuell zu erzeugen, und wobei die elektropneumatische Betriebsbremsventileinrichtung ein Betriebsbremsbetätigungsorgan sowie innerhalb wenigstens eines elektrischen Betriebsbremskreises wenigstens einen elektrischen Kanal mit wenigstens einem vom Betriebsbremsbetätigungsorgan betätigbaren elektrischen Bremswertgeber zum von einer Betätigung des Betriebsbremsbetätigungsorgans abhängigen Aussteuern von Betätigungssignalen aufweist, sowie die die Betätigungssignale empfangende zusätzliche elektronische Steuereinrichtung, welche abhängig von den Betätigungssignalen Bremsanforderungssignale in die elektronische Bremssteuereinrichtung einsteuert, sowie innerhalb wenigstens eines pneumatischen Betriebsbremskreises wenigstens einen pneumatischen Kanal, bei welchem durch Betätigung des Betriebsbremsbetätigungsorgans aufgrund einer Fahrerbremsanforderung wenigstens ein Steuerkolben der Betriebsbremsventileinrichtung mit einer ersten Betätigungskraft belastet wird und der Steuerkolben wenigstens ein einen Einlasssitz und einen Auslasssitz beinhaltendes Doppelsitzventil der Betriebsbremsventileinrichtung direkt oder indirekt steuert, um pneumatische Bremsdrücke oder Bremssteuerdrücke für die pneumatischen Radbremsaktuatoren zu erzeugen, und wobei die zusätzliche elektronische Steuereinrichtung der elektropneumatischen Betriebsbremsventileinrichtung beinhaltende Mittel zum Erzeugen einer zweiten Betätigungskraft unabhängig von einer Fahrerbremsanforderung vorgesehen sind, welche bei Vorliegen einer vom Fahrerwunsch unabhängigen Bremsanforderung in Bezug zur ersten Betätigungskraft gleichsinnig oder gegensinnig auf den wenigstens einen Steuerkolben wirkt.

Es wird daher als bevorzugte Ausführung der Erfindung vorgeschlagen, die in einer elektro-pneumatischen Betriebsbremseinrichtung stets vorhandene pneumatische oder elektro-pneumatische Betriebsbremsventileinrichtung oder das dort ohnehin vorhandene Fußbremsmodul so zu modifizieren, dass sie oder es zum einen eine Sensierung der Bremspedalstellung ermöglicht und zum anderen den von wenigstens einem pneumatischen Kanal der Betriebsbremsventileinrichtung ausgesteuerten Bremsdruck unabhängig von einer Bremspedalbetätigung modifizieren kann.

Eine solche dann "aktive" pneumatische oder elektro-pneumatische Betriebsbremsventileinrichtung oder ein solches "aktives" Fußbremsmodul als Synonym ist in der deutschen Patentanmeldung mit dem Aktenzeichen DE 10 2014 112 014.0 des Anmelders offenbart.

Der pneumatische Teil dieses "aktiven" Fußbremsmoduls funktioniert wie ein Betriebsbremsventil einer pneumatischen Betriebsbremseinrichtung und erzeugt auf eine Bremspedalbetätigung hin ein- oder mehrkreisig pneumatische Bremsdrücke oder Bremssteuerdrücke in wenigstens einen pneumatischen Betriebsbremskreis der elektropneumatischen Betriebsbremseinrichtung ein. Zumindest, wenn die elektro-pneumatische Betriebsbremseinrichtung ein elektronisch geregeltes oder bremsdruckgeregeltes Bremssystem (EBS) ist, besitzt das aktive Fußbremsmodul eine Sensorik zur Sensierung der Fahrerbremsanforderung in Form eines elektrischen Bremswertgebers. Diese Sensorik ist Bestandteil des elektrischen Kanals des "aktiven" Fußbremsmoduls oder des elektrischen Betriebsbremskreises der elektro-pneumatischen Betriebsbremseinrichtung und übermittelt ihr im fehlerfreien Betrieb die Betriebsbremsanforderung des Fahrers, welche dieser über das Betriebsbremspedal eingibt.

Damit auch im Falle eines Fehlers im elektrischen Kanal der Betriebsbremsventileinrichtung oder im elektrischen Betriebsbremskreis der elektro-pneumatischen Betriebsbremseinrichtung die Bremsanforderung des Fahrers umgesetzt wird, werden bei einem elektronisch geregelten Bremssystem (EBS) die in den wenigstens einen pneumatischen Betriebsbremskreis eingesteuerten Bremsdrücke oder Bremssteuerdrücke als Backup verwendet.

Das "aktive" Fußbremsmodul besitzt außerdem den elektrischen Kanal sowie eine elektronische Drucksteuer- oder Druckregeleinrichtung, mit der es in wenigstens einem pneumatischen Betriebsbremskreis Bremsdrücke oder Bremssteuerdrücke modifizieren, insbesondere erhöhen oder ohne Zutun des Fahrers erzeugen kann. Es ist somit in der Lage, Bremsanforderungen eines Fahrerassistenzsystems oder einer Autopiloteinrichtung umsetzen.

Um nun die Ausführung der von der Autopiloteinrichtung oder von dem Fahrerassistenzsystem erzeugten Bremsanforderung insgesamt ausfallsicher zu gestalten, wird die elektronische Bremssteuereinrichtung der elektro-pneumatischen Betriebsbremseinrichtung von der ersten elektrischen Energiequelle versorgt, die zusätzliche elektronische Steuereinrichtung des "aktiven" Fußbremsmoduls hingegen von der zweiten elektrischen Energiequelle.

Die Bremsanforderungssignale der Autopiloteinrichtung werden insbesondere z.B. über einen gemeinsamen Datenbus nicht nur in die elektronische Bremssteuereinrichtung der elektro-pneumatischen Betriebsbremseinrichtung sondern auch in die zusätzliche elektronische Steuereinrichtung des "aktiven" Fußbremsmoduls eingesteuert bzw. vom "aktiven" Fußbremsmodul z.B. auf einem Datenbus, an welchen beide Einrichtungen angeschlossen sind, von der zusätzlichen elektronischen Steuereinrichtung des "aktiven" Fußbremsmoduls "mitgelesen".

Wenn nun ein Ausfall oder ein Fehler der ersten elektrischen Energiequelle oder auch im elektrischen Betriebsbremskreis der elektro-pneumatischen Betriebsbremseinrichtung auftritt, erkennt dies das "aktive" Fußbremsmodul (FBM) z.B. durch Fehlen der Botschaften der elektro-pneumatischen Betriebsbremseinrichtung auf dem Datenbus oder durch eine explizite Fehlernachricht der elektronischen Bremssteuereinrichtung der elektropneumatischen Betriebsbremseinrichtung. Es ist auch möglich, dass die elektropneumatische Betriebsbremseinrichtung bzw. deren elektronische Bremssteuereinrichtung von einem anderen Steuergerät überwacht wird und dann dem "aktiven" Fußbremsmodul den Fehler oder Ausfall meldet. Dieses andere Steuergerät kann auch Teil der Autopiloteinrichtung oder des Fahrerassistenzsystems sein.

Dann kann das "aktive" Fußbremsmodul anstatt der elektro-pneumatischen Betriebsbremseinrichtung die Bremsvorgaben der Autopiloteinrichtung oder des Fahrerassistenzsystems umsetzen.

Weil ein solches Fußbremsmodul oder eine solche Betriebsbremsventileinrichtung einen variablen Druck zwischen einem minimalen Druck und einem maximalen Druck aussteuern kann, welcher dem Vorratsdruck im Druckluftvorrat entspricht, ist auch gewährleistet, dass die Bremswirkung im Fehlerfall nicht geringer ausfällt als im Normalfall. Denn im Normalfall kann auch nur ein Bremsdruck angefordert werden, welcher maximal dem Vorratsdruck entspricht.

Wie oben bereits ausgeführt, wird bevorzugt der wenigstens eine Steuerkolben der Betriebsbremsventileinrichtung außer durch die erste Betätigungskraft bei Vorliegen einer vom Fahrerwunsch unabhängigen Bremsanforderung zusätzlich durch eine zweite Betätigungskraft oder anstatt der ersten Betätigungskraft durch eine zweite Betätigungskraft belastet, welche in Bezug zur ersten Betätigungskraft parallel und gleichsinnig oder gegensinnig auf den wenigstens einen Steuerkolben wirkt und unabhängig von einer Fahrerbremsanforderung auf der Basis von durch die zusätzliche elektronische Steuereinrichtung der Betriebsbremsventileinrichtung ausgesteuerten elektrischen Signalen erzeugt wird.

Mit anderen Worten wirken auf den Steuerkolben der Betriebsbrems-ventileinrichtung die erste, von einer Fahrerbremsanforderung abhängige Betätigungskraft und/oder bei Vorliegen einer vom Fahrerwunsch unabhängigen Bremsanforderung die zweite Betätigungskraft in paralleler Weise, wobei die zweite Betätigungskraft auf der Basis von durch die zusätzliche elektronische Steuereinrichtung der Betriebsbremsventileinrichtung ausgesteuerten elektrischen Signalen erzeugt wird. Folglich vermögen entweder beide Betätigungskräfte (erste und zweite Betätigungskraft) zusammen oder auch jede Betätigungskraft einzeln für sich ohne Vorhandensein der jeweils anderen Betätigungskraft den Steuerkolben und damit auch das Doppelsitzventil des Betriebsbremsventils zu betätigen. Dabei können die beiden Betätigungskräfte gleichsinnig, d.h. in gleicher Richtung auf den Steuerkolben wirken als auch gegensinnig, d.h. in entgegen gesetzter Richtung.

Die erste, abhängig von einer Fahrerbremsanforderung erzeugte Betätigungskraft wirkt auf den wenigstens einen Steuerkolben stets in der gleichen Richtung, nämlich bedingt durch die Betätigungsrichtung des Bremsbetätigungsorgans in Richtung Öffnen des Auslasssitzes des Doppelsitzventils zum Belüften des wenigstens einen Betriebsbremskreises, so dass die Begriffe "gleichsinnig" bzw. "gegensinnig" in Bezug zur Wirkungsrichtung der ersten Betätigungskraft klar definiert sind. Dabei ist klar, dass im Falle einer mangels Fahrerbremsanforderung nicht vorhandenen ersten Betätigungskraft deren Wirkrichtung auf den wenigstens einen Steuerkolben lediglich gedacht ist, um eine Referenz für die hierzu dann parallele Wirkrichtung der zweiten Betätigungskraft angeben zu können.

Damit ergeben sich neue Steuerungsmöglichkeiten der elektropneumatischen Betriebsbremseinrichtung, indem nun der wenigstens eine pneumatische Betriebsbremskreis neben einer Betätigung durch den Fahrer nun auch elektrisch oder elektronisch und damit ohne Zutun des Fahrers bei Vorliegen einer Bremsanforderung automatisiert betätigt werden kann. Die Steuerung oder Regelung des wenigstens einen pneumatischen Betriebsbremskreises der elektropneumatischen Betriebsbremseinrichtung durch die zusätzliche elektronische Steuereinrichtung der Betriebsbremsventileinrichtung kann dann durch beliebige elektrische Steuersignale eines beliebigen Fahrzeugsystems bzw. einer beliebigen "Autorität" erfolgen, welche eine Bremsanforderung erzeugen kann, insbesondere durch das Fahrerassistenzsystem oder durch die Autopiloteinrichtung.

Die dadurch erzielbaren Vorteile liegen grundsätzlich darin, dass innerhalb des eigentlich pneumatischen Kanals einer elektropneumatischen Betriebsbremsventileinrichtung oder eines Fußbremsmoduls Bremsdrücke bzw. Bremssteuerdrücke für pneumatische Betriebsbremskreise unabhängig von einer Fahrerbremsanforderung automatisch erzeugt werden können.

Damit können insbesondere bereits in der Betriebsbremsventileinrichtung, d.h. an zentraler Stelle und für alle an die Betriebsbremsventileinrichtung angeschlossenen pneumatischen Betriebsbremskreise entsprechende Bremsdrücke ohne Zutun bzw. Einflussnahme des Fahrers insbesondere dann erzeugt werden, wenn ein Fehler oder ein Ausfall des elektrischen Betriebsbremskreises der elektropneumatischen Betriebsbremseinrichtung, insbesondere in dessen erster elektrischer Energiequelle, in dessen elektronischer Bremssteuereinrichtung oder in dessen elektropneumatischen Modulatoren festgestellt wurde. Dadurch steht auch bei einem Fehler oder Ausfall des elektrischen Betriebsbremskreises ein weiterer elektrischer Betriebsbremskreis zur Verfügung, der dann von der zusätzlichen elektronischen Steuereinrichtung der Betriebsbremsventileinrichtung gesteuert wird.

Damit wird die Voraussetzung geschaffen, dass durch geringfügige Änderungen einer elektropneumatischen Betriebsbremsventileinrichtung des Stands der Technik deren Funktionalität vorteilhaft im Sinne einer automatischen, ohne Zutun des Fahrers bewirkten Bremsensteuerung erweitert wird, indem deren elektronische Steuereinrichtung um Steuer- oder Regelalgorithmen ergänzt wird, durch welche dann die zweite Betätigungskraft mit Hilfe eines vorzugsweise zusätzlich vorzusehenden elektrischen, elektrohydraulischen oder elektropneumatischen Aktuators erzeugbar ist, der von der elektronischen Steuereinrichtung des Fußbremsmoduls angesteuert wird.

Eine mit einer solchen Betriebsbremsventileinrichtung versehene Betriebsbremseinrichtung reagiert dann bei einer automatischen (Fremd-) Betätigung wie bei einer Fahrerbremsanforderung, beispielsweise im Hinblick auf die Bremskraftverteilung oder die Steuerung der Anhängerbremsen. Die Betriebsbremsventileinrichtung ist dann insbesondere für ein oben beschriebenes (teil-)autonomes Fahren des Fahrzeugs innerhalb einer Fahrzeugkolonne geeignet, da bei Auftreten eines Fehlers in dem elektrischen Betriebsbremskreis eine automatisiert gesteuerte Bremsung noch über den wenigstens einen pneumatischen Betriebsbremskreis möglich ist.

Weiterhin wird die vom Gesetzgeber bei Fahrzeugbremsen geforderte Fehlertoleranz erfüllt. Da darüber hinaus ein zusätzlicher wenigstens teilweise elektrischer Betriebsbremskreis geschaffen wird, dessen elektrischer Anteil sich bis zu dem Aktuator erstreckt, der die zweite Betätigungskraft erzeugt, liegen in Bezug zu dem wenigstens einen pneumatischen Betriebsbremskreis unterschiedlich aufgebaute Bremskreise vor, wobei dann die Gefahr reduziert wird, dass dann beide Bremskreise von einem identischen oder gleichartigen Fehler außer Betrieb gesetzt werden. Mithin ist mit dem zusätzlichen (teil-) elektrischen Betriebsbremskreis möglich, die maximale zur Verfügung stehende Bremsleistung auszusteuern, da sich der wenigstens eine pneumatische Betriebsbremskreis des vollen Vorratsdrucks aus einem Druckluftvorrat bedienen kann. Nicht zuletzt können bestehende elektropneumatische Betriebsbremseinrichtungen einfach durch Austausch der Betriebsbremsventileinrichtung mit der Erfindung ausgestattet werden, ohne dass eine Änderung der elektrischen Verkabelung oder pneumatischen Verrohrung am Fahrzeug vorgenommen werden muss.

Wesentlich ist auch, dass der Fahrer die durch die zweite Betätigungskraft bewirkte Bremsanforderung jederzeit durch eine Betätigung des Bremsbetätigungsorgans der Betriebsbremsventileinrichtung übersteuern kann, weil dann parallel zu der zweiten Betätigungskraft die auf der Fahrerbremsanforderung basierende erste Betätigungskraft auf den wenigstens einen Steuerkolben aufgebracht wird, welche unter Umständen größer als die zweite Betätigungskraft und auch dieser entgegen gerichtet ist.

Denn in manchen Fällen kann es wünschenswert oder notwendig sein, dass der durch die erste Betätigungskraft auf den Steuerkolben repräsentierte Fahrerbremswunsch durch Erzeugen einer entsprechend großen und entgegen wirkenden zweiten Betätigungskraft übersteuert wird, beispielsweise dann, wenn der Fahrer bei einer oben beschriebenen Kolonnenfahrt mit jeweils geringem Abstand zu dem vorausfahrenden und nachfolgenden Fahrzeug plötzlich eine Vollbremsung einleiten möchte, wodurch die Gefahr eines Auffahrunfalls entstehen würde.

Besonders bevorzugt wird eine solche zweite Betätigungskraft auch erzeugt, wenn ein Fehler oder ein Ausfall des elektrischen Betriebsbremskreises der elektropneumatischen Betriebsbremseinrichtung festgestellt worden ist und wenn eine Bremsanforderung vorliegt. Von einem solchen Fehler oder Ausfall kann insbesondere die elektronische Bremssteuereinrichtung, wenigstens ein elektropneumatischer Achsmodulator oder auch der elektrische Kanal des elektropneumatischen Betriebsbremsventils betroffen sein. Denkbar ist aber auch ein Ausfall der ersten elektrischen Energiequelle des elektrischen Betriebsbremskreises.

Es versteht sich, dass im Falle mehrerer pneumatischer Kanäle der Betriebsbremsventileinrichtung auch mehr als nur ein einziger Steuerkolben durch die zweite Betätigungskraft belastet werden kann bzw. auch nur ein einziger Steuerkolben, welcher dann die zweite Betätigungskraft auf einen weiteren Betätigungskolben überträgt.

Bevorzugt beinhalten die Mittel zur Erzeugung der zweiten Betätigungskraft wenigstens einen elektrischen, elektrohydraulischen oder elektropneumatischen Aktuator. Denkbar sind dabei dann Ausführungsformen, bei denen die zweite Betätigungskraft mit Hilfe eines elektropneumatischen, elektrohydraulischen oder elektromechanischen Aktuators wie z.B. Magnetventil, Elektromotor usw. erzeugt werden, welcher dann direkt oder indirekt auf den wenigstens einen Steuerkolben der Betriebsbremsventileinrichtung wirkt.

Insbesondere können die Mittel zur Erzeugung der zweiten Betätigungskraft wenigstens eine elektro-pneumatische Magnetventileinrichtung beinhalten, welche gesteuert von der zusätzlichen elektronischen Steuereinrichtung zur Bildung der zweiten Betätigungskraft wenigstens einen pneumatischen Steuerdruck aussteuert, von welchem die zweite Betätigungskraft abhängig ist. Auf ein Signal der zusätzlichen elektronischen Steuereinrichtung der Betriebsbremsventil-einrichtung hin wird daher ein Steuerdruck ausgesteuert, der auf den wenigstens einen Steuerkolben direkt oder indirekt wirkt. Dieser Steuerdruck erzeugt dann an dem wenigstens einen Steuerkolben die zweite Betätigungskraft. Besonders bevorzugt wird die zweite Betätigungskraft daher elektro-pneumatisch unter bestmöglicher Nutzung der bereits vorhandenen Verhältnisse an der Betriebsbremsventileinrichtung erzeugt

Auch kann der von der wenigstens einen Magnetventileinrichtung ausgesteuerte Steuerdruck mittels einer Sensorik gemessen und durch Abgleich mit einem Sollwert in der zusätzlichen elektronischen Steuereinrichtung geregelt werden, wobei die Sensorik, die Magnetventileinrichtung zusammen mit der zusätzlichen elektronischen Steuereinrichtung einen Steuerdruckregler zur Regelung des pneumatischen Steuerdrucks bilden. Mit Hilfe der hier optionalen Regelung der zweiten Betätigungskraft oder einer der mit ihr in Zusammenhang stehenden obigen Größen kann die Genauigkeit der Bremsdruckeinstellung erhöht werden.

Zur Realisierung einer solchen Regelungsfunktion können Sensormittel vorgesehen werden, durch welche die auf den wenigstens einen Steuerkolben wirkende zweite Betätigungskraft, ein von der zweiten Betätigungskraft herrührender Betätigungsweg des wenigstens einen Steuerkolbens und/oder eine die zweite Betätigungskraft erzeugende Grö-βe als Ist-Größe gemessen wird, sowie Regelungs- und Stellmittel, durch welche die Ist-Größe mit einer Soll-Größe im Sinne einer Regelung abgeglichen wird.

Dabei kann der pneumatische Steuerdruck in wenigstens eine Steuerkammer der elektropneumatischen Betriebsbremsventileinrichtung einsteuerbar sein, welche von dem wenigstens einen Steuerkolben begrenzt ist, wobei die Steuerkammer derart angeordnet ist, dass sie bei Belüftung eine in Bezug zur ersten Betätigungskraft gleichsinnige oder gegensinnige zweite Betätigungskraft an dem wenigstens einen Steuerkolben bewirkt.

Gemäß einer Weiterbildung kann auch die Autopiloteinrichtung oder das Fahrerassistenzsystem ohne Zutun des Fahrers die Bremswirkungsvorgabe direkt oder indirekt in die zusätzliche elektronische Steuereinrichtung einsteuern, wobei die Bremswirkungsvorgabe in Abhängigkeit von Fahrbetriebsbedingungen erzeugt wird. Wie oben bereits beschreiben, können hierzu wenigstens die elektronische Bremssteuereinrichtung und die zusätzliche elektronische Steuereinrichtung an einen Datenbus angeschlossen sein.

Unter solchen Fahrbetriebsbedingungen sind alle erdenklichen Bedingungen und Umstände zu verstehen, welche bei einem Fahrbetrieb eines Fahrzeugs oder einer Fahrzeugkombination auftreten wie beispielsweise das Gier-, Roll- und/oder Nickverhalten, das Brems- oder Beschleunigungsverhalten wie auch der Abstand und/oder die Relativgeschwindigkeit zu einem vorausfahrenden Fahrzeug, aber auch das Verhalten im Stand oder eingeparkten Zustand.

Insbesondere ist der pneumatische Steuerdruck in wenigstens eine Steuerkammer der elektropneumatischen Betriebsbremsventileinrichtung einsteuerbar, welche von dem wenigstens einen Steuerkolben begrenzt ist, wobei die Steuerkammer derart angeordnet ist, dass sie bei Belüftung eine in Bezug zur ersten Betätigungskraft gleichsinnige oder gegensinnige zweite Betätigungskraft an dem wenigstens einen Steuerkolben bewirkt.

Für eine möglichst einfache Realisierung einer solchen Funktionalität kann weiterhin eine erste Steuerkammer in Bezug zu dem wenigstens einen Steuerkolben derart angeordnet sein, dass durch Belüftung der ersten Steuerkammer eine zweite, in Bezug auf die erste Betätigungskraft gleichsinnige Betätigungskraft auf den wenigstens einen Steuerkolben erzeugt wird. Zusätzlich wird aber eine zweite Steuerkammer derart angeordnet, dass durch Belüftung der zweiten Steuerkammer eine zweite, in Bezug auf die erste Betätigungskraft gegensinnige Betätigungskraft auf den wenigstens einen Steuerkolben erzeugt wird.

Dabei kann bevorzugt vorgesehen werden, dass die erste Steuerkammer mittels einer ersten Magnetventileinrichtung oder mittels eines ersten Steuerdruckreglers und die zweite Steuerkammer, unabhängig davon, mittels einer zweiten Magnetventileinrichtung oder mittels eines zweiten Steuerdruckreglers be- oder entlüftbar ist.

Nicht zuletzt kann der wenigstens eine Steuerkolben ein Doppelkolben mit zwei durch eine Kolbenstange verbundenen Kolben sein, von denen ein erster Kolben die erste Steuerkammer und von denen ein zweiter Kolben die zweite Steuerkammer begrenzt, wobei die erste Steuerkammer und die zweite Steuerkammer an voneinander weg weisenden Flächen einer Innenwandung der Betriebsbremsventileinrichtung grenzen, welche von der Kolbenstange dichtend durchragt wird.

Die Erfindung betrifft auch ein Fahrzeug mit einer oben beschriebenen elektrischen Ausrüstung.

Vorteilhafte Weiterbildungen der Erfindung ergeben sich aus den Patentansprüchen, der Beschreibung und den Zeichnungen.

### Zeichnung

Nachstehend sind Ausführungsbeispiele der Erfindung in der Zeichnung dargestellt und in der nachfolgenden Beschreibung näher erläutert. In der Zeichnung zeigt
- Fig.1: eine schematische Querschnittsdarstellung einer Betriebsbremsventileinrichtung einer elektro-pneumatischen Betriebsbremseinrichtung eines Fahrzeugs gemäß einer bevorzugten Ausführungsform der Erfindung in einer Stellung "Fahren";
- Fig.2: einen schematischen Schaltplan einer bevorzugten Ausführungsform einer elektrischen Ausrüstung eines Fahrzeugs, welche eine elektropneumatische Betriebsbremseinrichtung mit einer Betriebsbremsventileinrichtung nach Fig.1 sowie eine Autopiloteinrichtung und eine Lenkeinrichtung beinhaltet;
- Fig.3: eine vereinfachte schematische Darstellung der elektrischen Ausrüstung von Fig.2;
- Fig.4: die Lenkeinrichtung in einer Situation, in welcher der Fahrer lenkt;
- Fig.5: die Lenkeinrichtung in einer Situation, in welcher der Fahrer lenkt;
- Fig.6: die Lenkeinrichtung in einer Situation, in welcher die Autopiloteinrichtung lenkt;
- Fig.7: die Lenkeinrichtung in einer Situation, in welcher der Fahrer und die Autopiloteinrichtung lenken;
- Fig.8a-8c: Ausführungsformen einer Magnetventileinrichtung zur Steuerung der Betriebsbremsventileinrichtung.
- Fig.9a: ein Diagramm, in welchem die Längsbeschleunigung aₓ über der Zeit t angetragen ist,
- Fig.9b: ein zu dem Diagramm in Fig.9a zeitlich zugeordnetes Diagramm, in welchem der Bremsdruck p über der Zeit t angetragen ist,

### Beschreibung der Ausführungsbeispiele

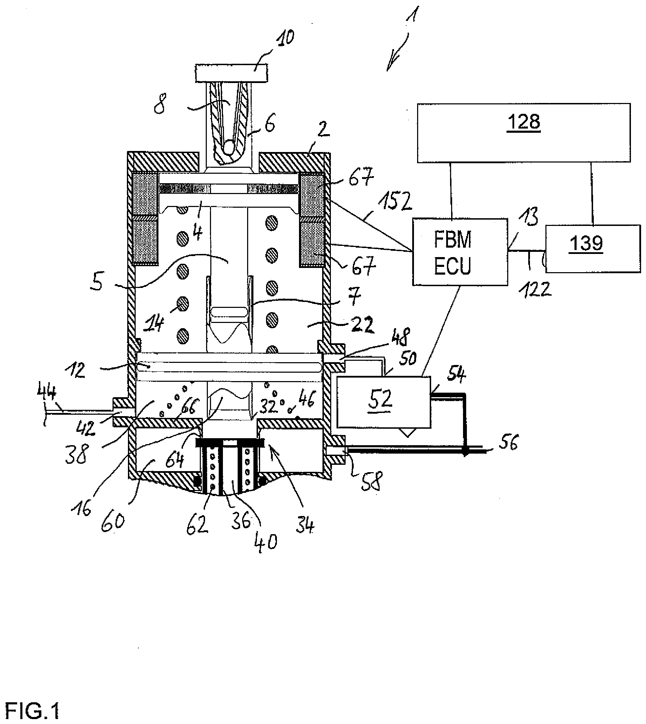

**Fig.1** zeigt eine schematische Querschnittsdarstellung einer Betriebsbremsventileinrichtung 1 einer elektro-pneumatischen Betriebsbremseinrichtung einer elektrischen Ausrüstung eines Fahrzeugs gemäß einer bevorzugten Ausführungsform der Erfindung in einer Stellung "Fahren". Unter elektrischer Ausrüstung soll dabei jegliche Fahrzeugausrüstung verstanden werden, welche elektrische Teile oder Komponenten aufweist.

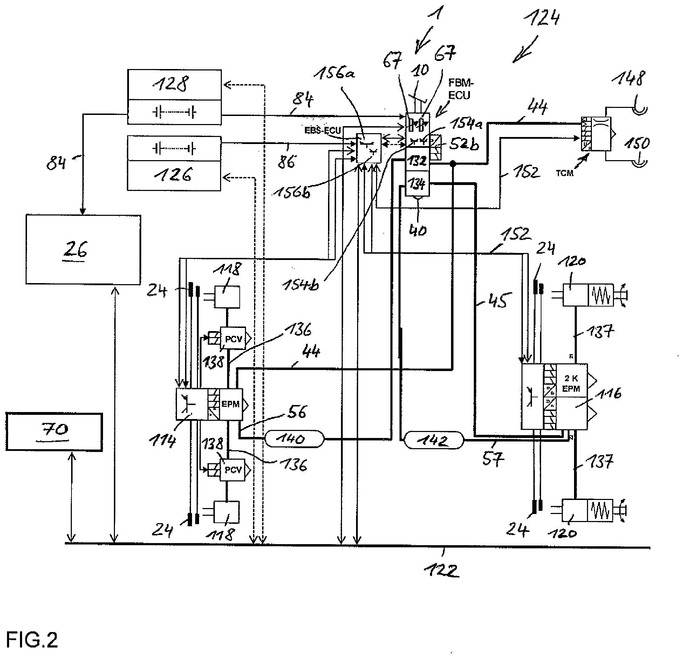

Die Betriebsbremsventileinrichtung 1 hat aus zeichnerischen Vereinfachungs-gründen lediglich einen pneumatischen Betriebsbremskreis bzw. einen pneumatischen Kanal 132 bzw. 134, weist aber in der Realität bevorzugt zwei pneumatische Betriebsbremskreise bzw. zwei pneumatische Kanäle 132, 134 auf (siehe Fig.2). Zusätzlich zu den pneumatischen Betriebsbremskreisen bzw. den pneumatischen Kanälen 132, 134 ist ein elektrischer Betriebsbremskreis bzw. ein elektrischer Kanal 130 mit einem hier beispielsweise berührungslosen Wegaufnehmer oder Bremswertgeber 67 zur Messung des Betätigungswegs eines Betriebsbremsbetätigungsorgans 10 vorhanden sein. Bei einer solchen elektro-pneumatischen Betriebsbremsventileinrichtung 1 spricht man auch von einem sog. Fußbremsmodul.

Die Betriebsbremsventileinrichtung 1 wird bevorzugt in der elektropneumatischen Betriebsbremseinrichtung 124 gemäß Fig.2 eingesetzt, welche ein elektronisches Bremssystem (EBS) mit Bremsdruckregelung darstellt, um einerseits in zwei nachrangigen pneumatischen (Backup-)Betriebsbremskreisen jeweils einen pneumatischen Backup-Bremssteuerdruck und andererseits in einem vorrangigem elektrischen Betriebsbremskreis ein von einer Bremsanforderung abhängiges elektrisches Signal in ein elektronisches Betriebsbremssteuergerät EBS/ABS-ECU und von dort, evtl. angepasst oder korrigiert, in nachgeordnete elektropneumatische Druckregelmodule 114, 116 einzusteuern, welche abhängig von diesen elektrischen, Soll-Bremsdrücke repräsentierenden Signalen einen entsprechenden Ist-Bremsdruck an Radbremszylinder 118, 120 der jeweils zugeordneten Achse (Vorderachse, Hinterachse) aussteuern.

Solche elektropneumatischen Druckregelmodule 114, 116 sind hinlänglich bekannt und beinhalten neben einem Backup-Magnetventil, welches den zugeordneten Backup-Bremssteuerdruck bei intaktem elektro-pneumatischem Bremskreis zurückhält, eine Einlass-Auslass-Magnetventilkombination, welche ausgangsseitig mit einem Relaisventil verbunden ist. Zusätzlich sind in einem solchen Druckregelmodul 114, 116 ein lokales elektronisches Steuergerät sowie ein Drucksensor zur Messung des vom Relaisventil ausgesteuerten Ist-Bremsdrucks integriert. Der vom Drucksensor gemessene Ist-Bremsdruck wird dann mit einem durch das vom elektrischen Kanal der Betriebsbremsventileinrichtung in das Druckregelmodul 114, 116 eingesteuerte Signal repräsentierten Soll-Bremsdruck im Sinne einer Druckregelung abgeglichen.

Damit ist die Betriebsbremsventileinrichtung 1 vorgesehen, um zum einen den elektrischen Betriebsbremskreis als auch wenigstens einen pneumatischen Betriebsbremskreis (Backup-Bremskreis) eines solchen elektronischen Bremssystems (EBS) zu steuern.

Die Betriebsbremsventileinrichtung 1 hat ein Gehäuse 2, in dem ein Stößelkolben 4 mit einem durch eine Deckelöffnung eines Gehäusedeckels ragenden Stößelaufnahme 6 axial beweglich aufgenommen ist. In die Stößelaufnahme 6 ragt ein Stößel 8 von oben her hinein, welcher mit einem Betriebsbremsbetätigungsorgan 10 in Form einer Fußbremsplatte verbunden ist. Wenn daher der Fahrer die Fußbremsplatte 10 betätigt, drückt der Stößel 8 in die Stößelaufnahme 6 und der Stößelkolben 4 wird durch die Betätigungskraft in Fig.1 nach unten bewegt.

Der Stößelkolben 4 überträgt die Betätigungskraft auf einen im Gehäuse 2 ebenfalls axial beweglich gelagerten Steuerkolben 12 vorzugsweise über eine Stößelkolben-Druckfeder 14. Der Steuerkolben 12 ist gegenüber der Innenwandung 66 mittels einer Steuerkolben-Druckfeder 46 abgestützt.

Weiterhin steht der Steuerkolben 12 über eine Stößelkolbenstange 5 mit dem Stößelkolben 4 in mechanischer Wirkverbindung, wobei die Stößelkolbenstange 5 mit dem Stößelkolben 4 verbunden ist und in einem als becherförmige Hülse ausgebildeten oberen Steuerkolbenstange 7 des Steuerkolbens 12 axial anschlagen kann, wenn die Stößelkolbenstange 5 den Boden der hülsenförmigen oberen Steuerkolbenstange 7 erreicht hat, wenn z.B. der Stößelkolben 4 auf den Steuerkolben 12 infolge einer Betätigung des Betriebsbremsbetätigungsorgans zubewegt wird. Andererseits kann die Stößelkolbenstange 5 in der oberen Steuerkolbenstange 7 gleiten, wenn der Stößelkolben 4 vom Steuerkolben 12 wegbewegt wird.

Auf der anderen Seite des Steuerkolbens 12 ist an einer unteren Steuerkolbenstange 16 ein Auslasssitz 32 eines Doppelsitzventils 34 ausgebildet, welcher gegen einen im Gehäuse 2 axial beweglich gelagerten, becherförmigen und hohlen Ventilkörper 36 des Doppelsitzventils 34 dichtet oder von diesem abgehoben, einen Strömungsquerschnitt zwischen einer Arbeitskammer 38 und einer kopfseitigen Durchgangsöffnung im Ventilkörper 36 freigibt, welche zu einem Entlüftungsanschluss 40 führt. Diese Situation ist in Fig.1 dargestellt.

Die Arbeitskammer 38 steht mit einem Anschluss 42 für einen pneumatischen Betriebsbremskreis in Verbindung, an welchen eine zu einem elektropneumatischen Druckregelmodul 114, 166 einer Achse (Vorderachse, Hinterachse) führende Druckleitung 44 oder 45 angeschlossen ist (Fig.2). In einem solchen Druckregelmodul 114, 116 ist ein Backup-Magnetventil integriert, welches den in der Druckleitung 44, 45 geführten Druck bei intaktem elektrischem Betriebsbremskreis gegenüber an das Druckregelmodul 114, 116 angeschlossene Radbremszylinder 118 bzw. 120 absperrt und bei defektem elektrischem Betriebsbremskreis durchleitet. Hierfür ist es beispielsweise als 2/2-Wegemagnetventil mit stromlos federbelasteter Öffnungsstellung und bestromter Sperrstellung ausgebildet.

Eine Steuerkammer 22 ist zwischen dem Stößelkolben 4 und der zu diesem weisenden Fläche des Steuerkolbens 12 ausgebildet. Dabei mündet ein Anschluss 48 am Gehäuse 2 in die erste Steuerkammer 22.

An den Anschluss 48 ist ein Ausgangsanschluss 50 einer Magnetventileinrichtung 52 angeschlossen ist, welche an ihrem Eingangsanschluss 54 mit einer an einen Druckluftvorrat angeschlossenen Vorratsdruckleitung 56 in Verbindung steht. Weiterhin ist an der Betriebsbremsventileinrichtung 1 ein Vorratsanschluss 58 vorhanden, an welchen ebenfalls die Vorratsdruckleitung 56 angeschlossen ist und welche mit einer Vorratskammer 60 in Verbindung steht.

Der Ventilkörper 36 ist mittels einer am Boden des Gehäuses 2 und am Inneren des Ventilkörpers 36 abgestützten Ventilkörper-Druckfeder 62 gegen einen Einlasssitz 64 des Doppelsitzventils 34 gedrängt, welcher an einem radial inneren Rand einer zentralen Durchgangsbohrung einer weiteren Innenwandung 66 des Gehäuses 2 ausgebildet ist. Im gegen die Wirkung der Ventilkörper-Druckfeder 62 von dem Einlasssitz 64 abgehobenen Zustand des Ventilkörpers 36 wird ein Strömungsquerschnitt zwischen dem Vorratsanschluss 58 bzw. der Vorratskammer 60 und der Arbeitskammer 38 freigegeben, welcher eine Strömung von unter Vorratsdruck stehender Druckluft in den Anschluss 42 für den Betriebsbremskreis, d.h. in die Bremsdruckleitung ermöglicht, um die Radbremszylinder der betreffenden Achse bzw. des betreffenden Bremskreises zu belüften.

Wie bereits oben erwähnt, ist in **Fig.1** die Stellung "Fahren" der Betriebsbremsventileinrichtung 1 gezeigt, in welcher der Auslasssitz 32 vom Ventilkörper 36 abgehoben und der Anschluss 42 für den Betriebsbremskreis und damit auch dessen Radbremszylinder mit dem Entlüftungsanschluss 40 verbunden sind. Dadurch sind die aktiven pneumatischen Radbremszylinder dieses Bremskreises entlüftet und damit gelöst.

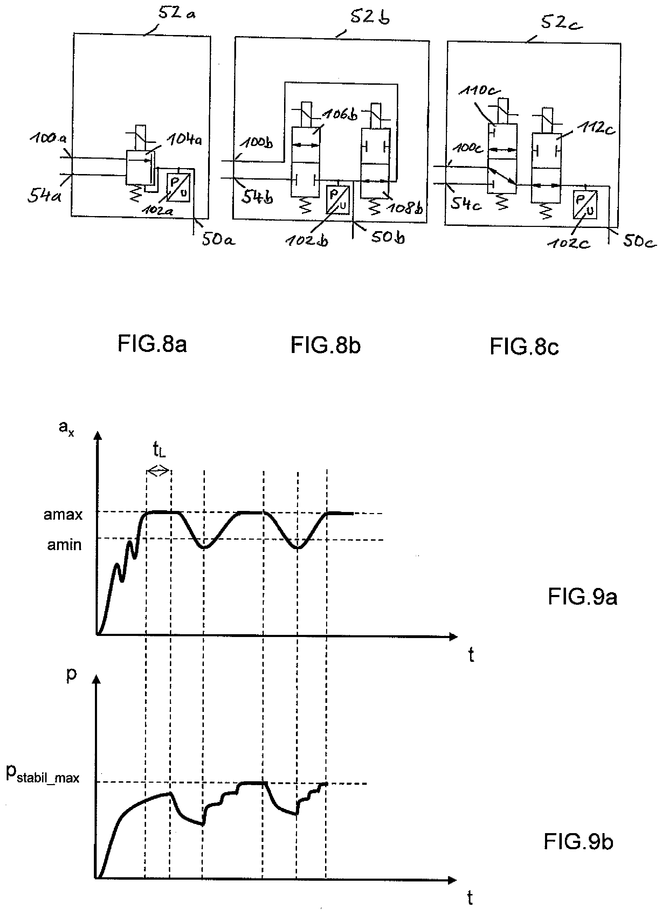

Die Magnetventileinrichtung 52, von welcher einige Ausführungsformen in Fig.8a bis Fig.8b gezeigt sind, ermöglicht eine Be- oder Entlüftung der ersten Steuerkammer 22 und wird von einer zusätzlichen elektronischen Steuereinrichtung FBM-ECU gesteuert, welche später noch näher beschrieben wird.

In dem Gehäuse 2 sind weiterhin zwei redundante, vorzugsweise axial hintereinander angeordnete und bevorzugt berührungslos wirkende Wegsensoren 67 im axialen Bereich des Stößelkolbens 4 als Bremswertgeber angeordnet, um dessen Betätigungsweg bzw. den Betätigungsgrad zu messen, welcher proportional zum Betätigungsweg bzw. Betätigungsgrad des Betriebsbremsbetätigungsorgans 10 ist. Die Signale dieser Wegsensoren 67 werden beispielsweise in dem elektrischen Kanal der Betriebsbremsventileinrichtung 1 verwendet und in die zusätzliche elektronische Steuereinrichtung FBM-ECU eingesteuert, welches diese Signale aufbereitet und dadurch z.B. datenbusfähig macht und über eine Schnittstelle 13 in eine Datenkommunikationsleitung 122, z.B. einen Datenbus einsteuert, an den das elektronische Betriebsbremssteuergerät EBS/ABS-ECU angeschlossen ist. Insofern stellt die zusätzliche elektronische Steuereinrichtung FBM-ECU (auch) eine elektronische Auswerteeinrichtung für die Signale der Wegsensoren 67 dar.

Die zusätzliche elektronische Steuereinrichtung FBM-ECU, die erste Magnetventileinrichtung 52 und die zugeordnete Verkabelung bzw. pneumatische Verrohrung oder pneumatischen Leitungen bilden zusammen mit den im Gehäuse 2 angeordneten Bauteilen der Betriebsbremsventileinrichtung 1 vorzugsweise eine Baueinheit, wobei die zusätzliche elektronische Steuereinrichtung FBM-ECU, die erste Magnetventileinrichtung 52 und die zugeordnete Verkabelung bzw. pneumatische Verrohrung oder pneumatischen Leitungen auch in einem eigenen Gehäuse untergebracht sein können, welches dann beispielsweise an das Gehäuse 2 angeflanscht ist.

Wenn nun der Fahrer das Betriebsbremsbetätigungsorgan 10 der Betriebsbremsventileinrichtung 1 betätigt, was einer Fahrerbremsanforderung entspricht, so wird der Stößelkolben 4 nach unten verschoben, wobei der Stößelkolben 5 gegen den Boden der becherförmigen Hülse 7 gedrängt und der Steuerkolben 12 ebenfalls nach unten verschoben wird, bis der Auslasssitz 32 gegen den Ventilkörper 36 dichtet und damit die Verbindung zwischen dem Anschluss 42 für den Betriebsbremskreis und dem Entlüftungsanschluss 40 verschließt, so dass keine weitere Entlüftung der zugeordneten Radbremszylinder 118, 120 mehr erfolgen kann.

Bei weiter gehender Betätigung des Betriebsbremsbetätigungsorgans 10 auf die Fahrerbremsanforderung hin wird dann der Ventilkörper 36 mit an ihm anliegenden Auslasssitz 32 unter Abheben vom Einlasssitz 64 nach unten gedrängt. Dadurch gelangt Druckluft unter Vorratsdruck von der Vorratskammer 60 in die Arbeitskammer 38 und von dort in den Anschluss 42 für den Betriebsbremskreis bzw. in die zugeordneten Radbremszylinder, um diese zu belüften und damit zuzuspannen. Dabei handelt es sich um eine reine Fahrerbremsung, bei welcher aufgrund der auf das Betriebsbremsbetätigungsorgan 10 vom Fahrer fahrerbremsanforderungs-abhängig ausgeübten Betätigungskraft über die Stößelkolben-Druckfeder 14 eine erste Betätigungskraft auf den Steuerkolben 12 ausgeübt wird, welche diesen letztlich in seine Belüftungsstellung stellt.

Bei einer solchen rein durch eine Fahrerbremsanforderung initiierten Bremsung ist die erste Magnetventileinrichtung 52 mittels der zusätzlichen elektronischen Steuereinrichtung FBM-ECU in Entlüftungsstellung gesteuert, in welcher die erste Steuerkammer 22 mit der Atmosphäre in Verbindung steht, zur Vermeidung von Druckeffekten, die infolge der Expansion der ersten Steuerkammer 22 entstehen.

Je nach Modulation des in die Steuerkammer 22 eingesteuerten pneumatischen Steuerdrucks durch die Magnetventileinrichtung 52 ist es dann möglich, eine definierte zweite Betätigungskraft am zweiten Steuerkolben 12 einzustellen, was wiederum in einer entsprechenden Bremskraft resultiert, so dass die Einstellung einer beliebigen Bremskraft zwischen dem Wert Null und einer aus dem Vorratsdruck in der Vorratsdruckleitung 56 bzw. 57 resultierenden maximalen Bremskraft möglich ist. Im vorliegenden Fall wirkt die zweite Betätigungskraft beispielsweise richtungsgleich und parallel in Bezug auf die erste Betätigungskraft. Es ist aber auch eine gegenläufige Wirkrichtung der zweiten Betätigungskraft denkbar.

Wenn bei der Ausführungsform von Fig.1 ohne vorliegende Fahrerbremsanforderung die erste Magnetventileinrichtung 52 mittels der zusätzlichen elektronischen Steuereinrichtung FBM-ECU in Belüftungsstellung gestellt wird, wird die erste Steuerkammer 22 mit einem pneumatischen Steuerdruck beaufschlagt, welcher wiederum eine hier nach unten gerichtete zweite Betätigungskraft am Steuerkolben 12 erzeugt, welcher dann wie bei der oben beschriebenen Fahrerbetätigung welche diesen letztlich in seine Belüftungsstellung stellt.

Weiterhin wirkt dann der in der ersten Steuerkammer 22 herrschende Steuerdruck auch auf den Stößelkolben 4 und damit auf das Betriebsbremsbetätigungsorgan 10 zurück, was der Fahrer an seinem Fuß spüren kann, wenn er das Betriebsbremsbetätigungsorgan 10 berührt (Pedalrückwirkung). Damit kann der Fahrer eine Einleitung einer automatischen Bremsung am Fuß spüren.

Neben einer durch den Fahrer initiierten Betriebsbremsung und einer ohne Zutun des Fahrers aufgrund von automatisiert erzeugten Betriebsbremsanforderungssignalen initiierten Betriebsbremsung ist weiterhin auch eine kombinierte Betriebsbremsung denkbar, bei welcher mit der Betriebsbremsventileinrichtung 1 sowohl auf eine Fahrerbremsanforderung als auch auf eine automatisch generierte Bremsanforderung hin gebremst wird. Dann wirken auf den Steuerkolben 12 einerseits die erste Betätigungskraft aus der Fahrerbetriebsbremsanforderung wie auch die zweite Betätigungskraft aus der automatisch generierten Bremsanforderung hier beispielsweise gleichsinnig und parallel, wodurch sich die Beträge der beiden Betätigungskräfte am Steuerkolben 12 beispielsweise addieren.

Der von der ersten Magnetventileinrichtung 52 ausgesteuerte Steuerdruck für die erste Steuerkammer 22 kann einer Druckregelung unterworfen sein. In diesem Fall wird der Ist-Steuerdruck am Ausgangsanschluss 50 mit einem Drucksensor gemessen und von der zusätzlichen elektronischen Steuereinrichtung FBM-ECU gegenüber einem vorgegebenen Soll-Steuerdruck durch eine entsprechende Ansteuerung der ersten Magnetventileinrichtung 52 abgeglichen. Die Magnetventileinrichtung 52 bildet dann zusammen mit dem Drucksensor und der elektronischen Steuereinrichtung ECU einen Druckregler für den Steuerdruck in der Steuerkammer 22.

In **Fig.8a** bis **Fig.8c** sind nun Beispiele für Magnetventileinrichtungen 52a, 52b, 52c bzw. Steuerdruckregler 52a, 52b, 52c dargestellt, wie sie in den vorangehenden Ausführungsbeispielen den pneumatischen Steuerdruck für die Steuerkammer 22 steuern bzw. regeln. Vereinfachend sind dabei lediglich die in Fig.1 verwendeten Bezugszeichen angetragen.

Diesen Beispielen ist gemeinsam, dass sie von der elektronischen Steuereinrichtung ECU gesteuert werden, einen Eingangsanschluss 54a, 54b, 54c aufweisen, welcher über die Vorratsdruckleitung 56 mit dem Druckluftvorrat verbunden ist, sowie einen Ausgangsanschluss 50a, 50b, 50c, welcher jeweils mit der ersten Steuerkammer 22 oder mit der zweiten Steuerkammer 24 in Verbindung steht oder in Verbindung gebracht wird. Weiterhin weisen alle Ausführungen eine Entlüftung 100a, 100b, 100c auf sowie einen Drucksensor 102a, 102b, 102c zum Messen des Ist-Steuerdrucks am Ausgangsanschluss 50a, 50b, 50c, so dass in Verbindung mit entsprechenden Algorithmen in der elektronischen Steuereinrichtung ECU, welche das am Ausgangsanschluss 50a, 50b, 50c anstehende Ist-Steuerdrucksignal gemeldet wird, eine Druckregelung des ausgesteuerten Steuerdrucks möglich ist bzw. auch durchgeführt wird.

Bei der Ausführung von **Fig.8a** sorgt ein Proportionalventil 104a für einen entsprechend dem elektrischen Steuersignal (proportional) ausgesteuerten Steuerdruck am Ausgangsanschluss 50a, wobei ebenfalls eine Be- und Entlüftung möglich ist. Bei der Ausführung von **Fig.8b** ist eine Einlass-/Auslassventilkombination aus zwei 2/2-Wege-Magnetventilen 106b, 108b vorgesehen, wobei das mit dem Eingangsanschluss 54b direkt verbundene Einlassventil 106b unbestromt geschlossen und bestromt geöffnet und das Auslassventil 108b unbestromt geöffnet und bestromt geschlossen ist. Nach Fig.8c wird als Magnetventileinrichtung 52c ein 3/2-Wege-Magnetventil 110c als Be- und Entlüftungsventil mit einer Belüftungsstellung und einer Entlüftungsstellung in Kombination mit einem 2/2-Wege-Magnetventil 112c als Halteventil verwendet, welches in seiner Sperrstellung den Druck am Ausgangsanschluss 50c hält.

Eine solche Magnetventileinrichtung 52a, 52b, 52c kann in jeder der oben beschriebenen Ausführungsformen in Kombination mit dem Drucksensor 102 als Steuerdruckregler verwendet werden, der die zusätzliche elektronische Steuereinrichtung FBM-ECU einschließt, um den am Ausgang 50a, 50b, 50c anstehenden Steuerdruck zu regeln.

**Fig.2** zeigt einen schematischen Schaltplan einer bevorzugten Ausführungsform einer elektropneumatischen Betriebsbremseinrichtung 124 eines zur Ankopplung eines Anhängers geeigneten Zugfahrzeugs mit einer oben beschriebenen Betriebsbremsventileinrichtung 1. Lediglich exemplarisch wird dort die Betriebsbremsventileinrichtung 1 gemäß Fig.1 verwendet, wobei dort beispielsweise ein elektrischer Betriebsbremskreis und zwei pneumatische Betriebsbremskreise vorhanden sind.

Die elektropneumatische Betriebsbremseinrichtung 124 bzw. deren elektronische Bremssteuereinrichtung EBS/ABS-ECU wird von einer ersten elektrischen Energiequelle 126 mit elektrischer Energie versorgt, die Bestandteil des elektrischen Betriebsbremskreises ist und unabhängig von einer zweiten elektrischen Energiequelle 128 ist, welche beispielsweise die Betriebsbremsventileinrichtung 1 und insbesondere deren elektronische Steuereinrichtung FBM-ECU mit elektrischer Energie versorgt.

Bei der Betriebsbremsventileinrichtung 1 ist der elektrische Kanal 130 für den elektrischen Betriebsbremskreis, der pneumatische Vorderachskanal 132 für den pneumatischen Vorderachsbetriebsbremskreis sowie der pneumatische Hinterachskanal 134 für den pneumatischen Hinterachsbetriebsbremskreis erkennbar. Erkennbar sind auch die Druckleitungen 44, 45, welche den im Vorderachskanal 132 bzw. im Hinterachskanal 134 herrschenden Druck dem zugeordneten Druckregelmodul 114 bzw. 116 zuführen, wo dieser Druck durch das integrierte Backup-Magnetventil zunächst gegenüber den Radbremszylindern 118, 120 abgesperrt wird. Das der Hinterachse zugeordnete Druckregelmodul 116 ist beispielsweise ein 2-Kanal-Druckregelmodul, an der Vorderachse ist demgegenüber ein 1-Kanal-Druckregelmodul 114 verbaut, welches über Bremsdruckleitungen, in die ABS-Drucksteuerventile 138 integriert sind, mit den Radbremszylindern 118 an der Vorderachse in Verbindung steht. Die ABS-Drucksteuerventile werden im Falle von unzulässigem Bremsschlupf von der elektronischen Bremssteuereinrichtung EBS/ABS-ECU in bekannter Weise angesteuert, um den Bremsschlupf an den Rädern der Vorderachse an einen zulässigen Bremsschlupf anzupassen. Die Bremsschlupfregelung an den Rädern der Hinterachse erfolgt mittels des dortigen 2-Kanal-Druckregelmoduls 116, welches über Bremsdruckleitungen 137 mit den zugeordneten Radbremszylindern verbunden ist. Zur Radschlupfmessung sind Raddrehzahlsensoren 24 an jedem Rad angeordnet. In die elektronischen Bremssteuereinrichtung EBS/ABS-ECU sind Regelroutinen einer ESP- (Elektronisches Stabilitätssystem), ASR- (Antriebsschlupfregelung) und ABS-(Antiblockiersystem, Bremsschlupfregelung) Regelung implementiert.

Vorzugsweise sind für die beiden Betriebsbremskreise (Vorderachse, Hinterachse) jeweils ein eigener Druckluftvorrat 140, 142 vorgesehen, welche jeweils über eine Vorratsdruckleitung 144, 146 einerseits an den jeweiligen pneumatischen Kanal 132, 134 des Betriebsbremsventils und andererseits an die Druckregelmodule 114, 116 angeschlossen sind. Die Druckregelmodule 114, 116 beinhalten eine Einlass/Auslassventilkombination sowie ein von dieser pneumatisch angesteuertes Relaisventil, wobei jeweils abhängig von einer Ansteuerung durch die elektronische Bremssteuereinrichtung EBS/ABS-ECU aus dem Vorratsdruck jeweils ein Bremsdruck moduliert und in die Bremsdruckleitungen 136, eingesteuert wird. Weiterhin ist in den Druckregelmodulen 114, 116 für jeden Kanal bzw. in einem Anhängersteuermodul TCM jeweils ein Drucksensor integriert, der den jeweils herrschenden Ist-Bremsdruck in den Bremsdruckleitungen 136, 137 bzw. am Kupplungskopf "Bremse" misst und in lokale elektronische Steuereinrichtungen rückkoppelt, die jeweils in den Druckregelmodulen 114, 116 bzw. in dem Anhängersteuermodul TCM integriert sind, um eine Bremsdruckregelung durch Vergleich mit einem Soll-Bremsdruck in bekannter Weise durchführen zu können.

Über beispielsweise die dem pneumatischen Vorderachsbremskreis zugeordnete Druckleitung 44 wird das hinlänglich bekanntes Anhängersteuermodul TCM redundant druckluftgesteuert, welches priorisiert ebenfalls von der elektronischen Bremssteuereinrichtung EBS/ABS-ECU elektrisch gesteuert wird. Das Anhängersteuermodul TCM wird außerdem von einem der Druckluftvorräte 140 oder 142 mittels der Druckluftvorratsleitung 144 oder 146 druckluftversorgt, was aber in Fig.2 nicht gezeigt ist. Ausgangsseitig steht das Anhängersteuermodul TCM mit einem Kupplungskopf "Bremse" 148 und einem Kupplungskopf "Vorrat" 150 in Verbindung, um die Anhängerbremsen in bekannter Weise zu steuern.

Es versteht sich, dass die Druckregelmodule 114, 116, das Anhängersteuermodul TCM sowie die ABS-Drucksteuerventile 138 jeweils mittels einer elektrischen Steuerleitung 152 mit der elektronischen Bremssteuereinrichtung EBS/ABS-ECU verbunden sind.

Zu erkennen sind außerdem die vorzugsweise in die z.B. nach Fig.1 ausgebildete Betriebsbremsventileinrichtung 1 z.B. integrierte zusätzliche elektronische Steuereinrichtung FBM-ECU sowie die erste Magnetventileinrichtung 52b, die beispielsweise nach Fig.8b eine Einlass-/Auslassventilkombination 106b, 108b sowie einen Drucksensor 102b enthält. Bei dem gezeigten Ausführungsbeispiel sind diese Komponenten beispielsweise in einem eigenen Gehäuse untergebracht, welches an das Gehäuse der Betriebsbremsventileinrichtung 1 angeflanscht ist. Weiterhin sind auch die redundant vorhandenen Bremswertgeber 67 sichtbar. Die zusätzliche elektronische Steuereinrichtung FBM-ECU beinhaltet beispielsweise zwei redundante, sich gegenseitig überwachende Mikroprozessoren 154a, 154b. In gleicher Weise verfügt auch die elektronische Bremssteuereinrichtung EBS/ABS-ECU über zwei redundante Mikroprozessoren 156a, 156b. Die Raddrehzahlsensoren 24 an den Rädern melden außerdem die jeweilige Raddrehzahl an die lokalen Steuergeräte in den Druckregelmoduln 114, 116, die sie dann an das elektronische Bremssteuergerät EBS/ABS-ECU weiterschleifen.

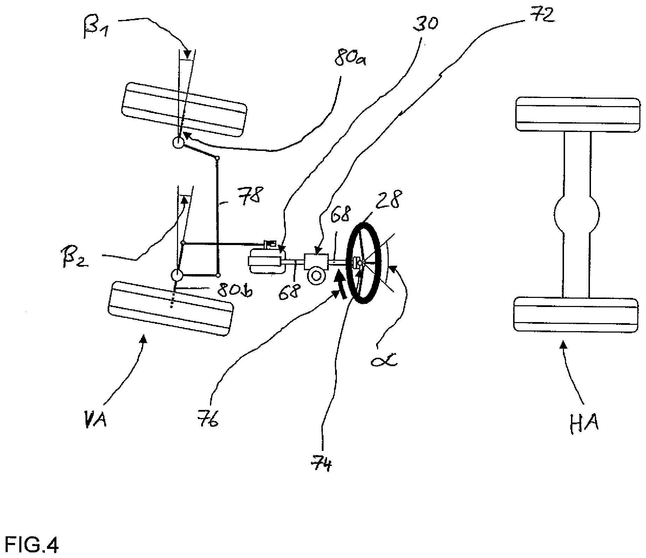

Die elektrische Ausrüstung umfasst weiterhin eine elektromechanische Lenkreinrichtung 26 mit beispielsweise durchgehender mechanischer Verbindung zwischen einem Lenkrad 28 und einem Lenkgetriebe 30 **(****Fig.4****).** Ein elektronisches Lenksteuergerät der Lenkeinrichtung 26 kommuniziert mit einem Fahrzeugdatenbus 68, an welchen auch das elektronische Bremssteuergerät EBS/ABS-ECU, die zusätzliche elektronische Steuereinrichtung FBM-ECU sowie eine Autopiloteinrichtung 70 angeschlossen sind. Die Autopiloteinrichtung 70 ist ausgebildet, dass sie unter anderem die Lenkeinrichtung 26, die elektropneumatische Betriebsbremseinrichtung 124 sowie die Betriebsbremsventileinrichtung 1 bzw. deren Steuergeräte ohne Zutun des Fahrers ansteuert und stellt damit auch ein Fahrerassistenzsystem dar. Damit wird eine zumindest teilweise automatisierte Steuerung der Bremsen und der Lenkung des Fahrzeugs realisiert, bevorzugt in Abhängigkeit von Fahrbetriebsbedingen wie beispielsweise der Fahrzeuggeschwindigkeit, des Abstands und/oder der Relativgeschwindigkeit in Bezug zu einem vorausfahrenden Fahrzeug, der Fahrzeugstabilität insbesondere auch zusammen mit dem Anhänger usw.. Hierzu empfängt die Autopiloteinrichtung 70 über hier nicht gezeigte Sensoren Fahrbetriebsbedingungen betreffende Daten.

Die Lenkeinrichtung 26 wird über die zweite Energiequelle 128 mit elektrischer Energie versorgt und die Autopiloteinrichtung 70 beispielsweise ebenfalls. Das Anhängersteuermodul TCM, welches vom elektronischen Bremssteuergerät EBS/ABS-ECU elektrisch gesteuert ist, steht einerseits mit einem Kupplungskopf "Bremse" 148 und andererseits mit einem Kupplungskopf "Vorrat 150 in Verbindung, wobei an diese Kupplungsköpfe entsprechende, zu dem Anhänger führende Brems- und Vorratsleitungen lösbar angeschlossen sind.

Die elektromechanische Lenkeinrichtung 26 ist im Einzelnen in **Fig.4** dargestellt. Das vom Fahrer über das Lenkrad 28 aufgebrachte Lenkradmoment 76 wird über eine Lenkspindel 68 in einen elektrischen Lenkaktuator 72 eingeleitet, welcher beispielsweise durch einen Elektromotor gebildet wird. An der Lenkspindel 68 ist außerdem ein Lenkradmomentsensor 74 angebracht, welcher das jeweils vom Fahrer über das Lenkrad 28 aufgebrachte Lenkradmoment erfasst und als Lenkradmomentsignal in ein hier nicht elektronisches Lenksteuergerät einsteuert, welches an den Datenbus 122 angeschlossen ist **(****Fig.2****).**

Das Lenksteuergerät kann grundsätzlich den Lenkaktuator 72 abhängig vom am Lenkrad 28 erfassten Lenkradmoment 76 ansteuern, um ein gegenüber dem vom Fahrer aufgebrachten Lenkradmoment 76 ein zusätzliches Überlagerungsmoment an der Lenksäule 68 zu erzeugen. Deshalb stellt die Lenkeinrichtung hier beispielsweise eine sog. Überlagerungslenkung mit Lenkmomentüberlagerung dar. Anstatt des Lenkradmoments 76 kann auch der jeweilige Lenkradwinkel a durch einen Lenkradwinkelsensor erfasst werden, so dass dann eine Überlagerungslenkung mit Lenkradwinkelüberlagerung vorläge.

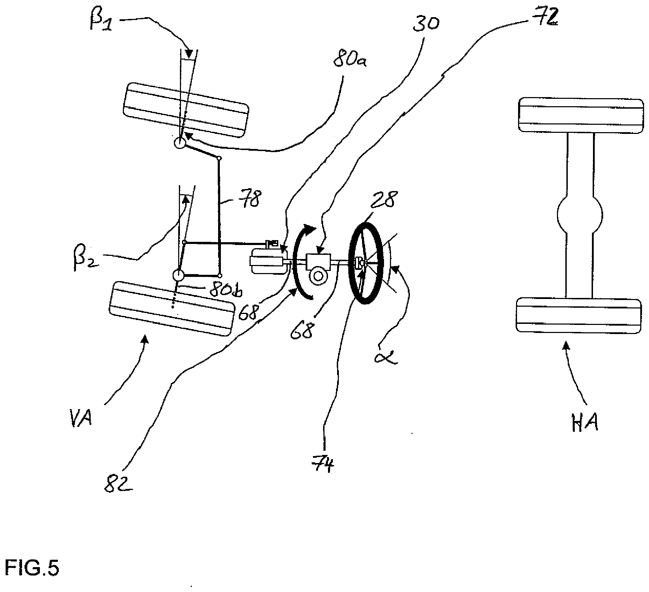

Jedoch kann der Lenkaktuator 72 auch ohne Zutun des Fahrers, d.h. ohne Betätigung des Lenkrads 28 ein Lenkmoment 82 an der Lenkspindel 68 erzeugen **(****Fig.5****).** Bei dem in **Fig.4** vorliegenden Fall steuert der Lenkaktuator 72 kein Lenkmoment 82 in die Lenkspindel 68 ein, so dass die Lenkkräfte allein von dem vom Fahrer erzeugten Lenkradmoment 76 abgeleitet werden. In Fig.4 ist die Situation gezeigt, in welcher die Lenkanforderung ausschließlich vom Fahrer ausgeht, welcher das Lenkrad 28 entsprechend betätigt.

Das Lenkgetriebe 30 beinhaltet hier bevorzugt eine hydraulische Servounterstützung und verstärkt das Lenkradmoment 76. Das Lenkgetriebe 30 steuert dann über ein Lenkgestänge 78 Achsschenkel 80a, 80b des linken und rechten Vorderrads der gelenkten Vorderachse VA an, um dort jeweils einen Lenkwinkel b₁ und b₂ für rechts und links einzustellen. Die Hinterachse HA ist hier vorzugsweise ungelenkt.

**Fig.5** zeigt die Situation, in welcher das an der Lenkspindel 68 wirkende Lenkmoment 82 ausschließlich vom Lenkaktuator 72 aufgrund dessen Ansteuerung durch das elektronische Lenksteuergerät erzeugt wird. Diese Ansteuerung erfolgt beispielsweise durch eine von der Autopiloteinrichtung 70 ausgesteuerte Lenkanforderung, welche mittels des Datenbusses 122 übermittelt wird.

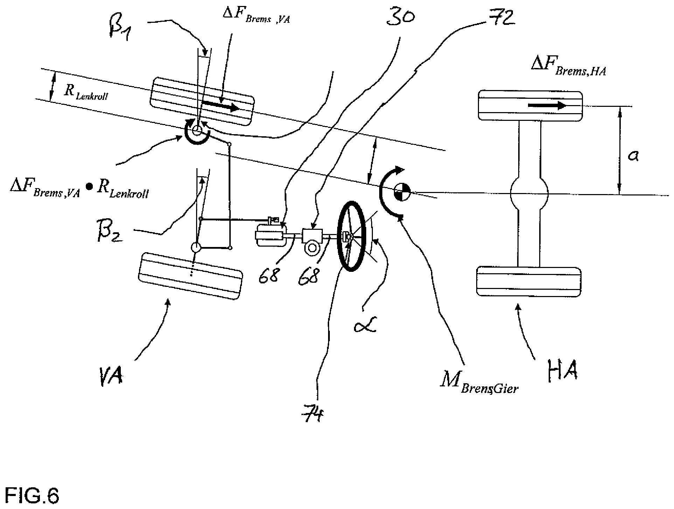

**Fig.6** zeigt eine sog. Lenkbremsung, bei welcher durch gezieltes Einbremsen hier beispielsweise des jeweils linken Rads an der Vorderachse VA und an der Hinterachse HA ein Giermoment M_{Brems,Gier} erzeugt wird, welches das Fahrzeug veranlasst, hier beispielsweise einer Linkskurvenbahn zu folgen. Maßgebend für das Giermoment M_{Brems,Gier} ist der Lenkrollradius R_{Lenkroll} am linken Vorderrad, welcher in Kombination mit der dort wirkenden Bremskraft F_{Brems,VA} ein Bremsmoment F_{Brems,VA}·R_{Lenkroll} erzeugt, weiterhin die halbe Achslänge a, welche in Kombination mit der Bremskraft F_{Brems,HA} ein Bremsmoment F_{Brems,HA}·a erzeugt. Die Lenkbremsanforderung wird hier von der Autopiloteinrichtung 70 initiiert und über den Datenbus 122 an das elektronischen Bremssteuergerät EBS/ABS-ECU übermittelt, welches daraufhin die Einbremsung der beiden Räder veranlasst.

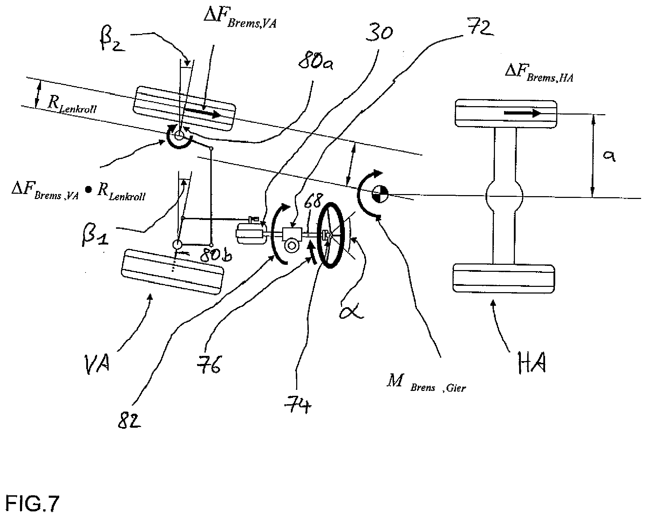

In **Fig.7** ist die Situation dargestellt, bei welcher ein vom Fahrer über das Lenkrad 28 auf die Lenkspindel 68 aufgebrachtes Lenkradmoment 76 einem vom Lenkaktuator 72 aufgebrachten Lenkmoment 82 überlagert wird. Weiterhin ist auch Giermoment M_{Brems,Gier} aufgrund einer Lenkbremsung wirksam. Daher ist hier der fall gezeigt, bei welchem die in Fig.4 bis Fig.6 gezeigten Möglichkeiten einer Lenkung des Fahrzeugs einander überlagert sind.

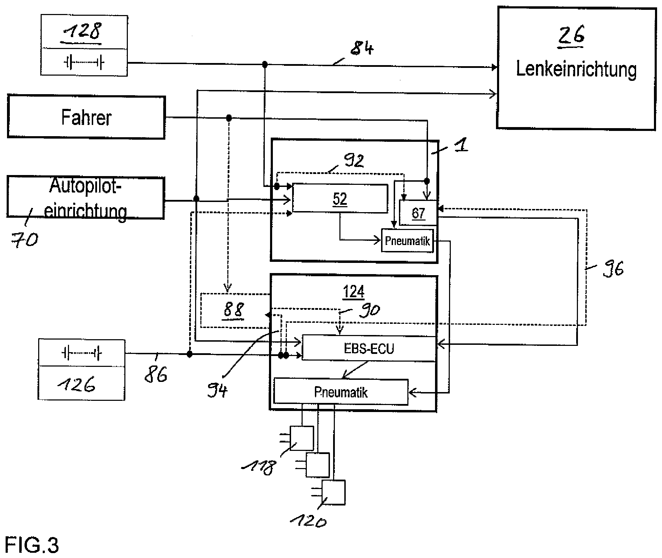

**Fig.3** zeigt nun schematisch verschiedene Ausführungsformen einer Stromversorgung der elektrischen und elektronischen Komponenten der elektrischen Ausrüstung des Fahrzeugs.

Gemäß einer ersten Ausführungsform werden die Lenkeinrichtung 26 sowie die Betriebsbremsventileinrichtung 1 bzw. deren elektronische Steuereinrichtung FBM-ECU von der zweiten elektrischen Energiequelle 128 und die elektro-pneumatische Betriebsbremseinrichtung 124 bzw. deren Bremssteuergerät EBS/ABS-ECU von der ersten elektrischen Energiequelle 126 stromversorgt. Die entsprechenden Energiequellesleitungen 84, 86 sind in Fig.3 in durchgezogenen Linien mit dreieckflächenförmigen Pfeilen gekennzeichnet. Optional wird hier der Bremswertgeber 67 der Betriebsbremsventileinrichtung 1 ebenfalls von der zweiten elektrischen Energiequelle 128 stromversorgt, wie durch die gestrichelt gezeichnete Energiequellesleitung 92 angedeutet wird.

Dabei ist die elektronische Bremssteuereinrichtung 1 der elektro-pneumatischen Betriebsbremseinrichtung 124 bzw. deren elektronische Steuereinrichtung FBM-ECU ausgebildet, dass sie einen Ausfall oder Fehler in einem die zweite elektrischen Energiequelle 128 beinhaltenden zweiten elektrischen Energiequelleskreis oder in der Lenkeinrichtung 26 erkennt, wobei dann die elektronische Bremssteuereinrichtung 1 bzw. deren elektronische Steuereinrichtung FBM-ECU die elektro-pneumatische Betriebsbremseinrichtung 124 ansteuert, damit diese von der Autopiloteinrichtung 70 eventuell ausgesteuerte Lenkanforderungssignale in Form von radindividuellen oder seitenindividuellen Bremseingriffen an den Radbremsaktuatoren umsetzt.

Gemäß einer zweiten Ausführungsform ist vorgesehen, dass wenigstens ein beispielsweise von der ersten elektrischen Energiequelle 126 oder von dem ersten Energiequelleskreis mit elektrischer Energie über eine in gestrichelter Linie dargestellte Energiequellesleitung 94 versorgter und vom Betriebsbremsbetätigungsorgan 10 betätigbarer, elektrischer Signalgeber 88 vorgesehen ist, welcher bei einer Betätigung des Betriebsbremsbetätigungsorgans 10 über eine in **Fig.3** in gestrichelter Linie gezeichnete Signalleitung 90 ein elektrisches Betätigungssignal in die elektronische Bremssteuereinrichtung EBS/ABS-ECU einsteuert. Dabei kann der elektrische Signalgeber 88 in die elektropneumatische Betriebsbremsventileinrichtung 1 integriert sein und insbesondere durch einen elektrischen Schalter gebildet werden.

Gemäß einer dritten Ausführungsform kann wenigstens ein von der ersten elektrischen Energiequelle 126 oder von dem ersten Energiequelleskreis mit elektrischer Energie versorgter und vom pneumatischen Bremsdruck oder Bremssteuerdruck in einem oder beiden pneumatischen Betriebsbremssteuerkreis(en) betätigbarer, elektrischer Signalgeber 88 vorgesehen sein, welcher bei einer Betätigung des Betriebsbremsbetätigungsorgans 10 ein elektrisches Betätigungssignal in die elektronische Bremssteuereinrichtung EBS/ABS-ECU einsteuert. Dabei kann der elektrische Signalgeber 88 wiederum in die elektropneumatische Betriebsbremsventileinrichtung 1 integriert sein und insbesondere durch einen elektrischen Drucksensor gebildet werden. Dieser vom Signalgeber 88 gemessene Bremsdruck oder Bremssteuerdruck steht jeweils in den Druckleitungen 44, 45 der beiden pneumatischen Betriebsbremskreise an (Fig.2). Bei der dritten Ausführungsform wird der Bremswertgeber 67 der Betriebsbremsventileinrichtung 1 über eine in gestrichelter Linie gezeichnete Energiequellesleitung 96 beispielsweise von der ersten elektrischen Energiequelle 126 stromversorgt.

Bei der zweiten und dritten Ausführungsform ist die elektronische Bremssteuereinrichtung EBS/ABS-ECU insbesondere ausgebildet, dass sie einen Ausfall oder Fehler in dem die zweiten elektrische Energiequelle 128 beinhaltenden zweiten elektrischen Energiequelleskreis oder in der Lenkeinrichtung 26 erkennt und bei Erkennen eines solchen Fehlers und bei Vorliegen eines vom Signalgeber 88 erzeugten Betätigungssignals von der Autopiloteinrichtung 70 eventuell ausgesteuerte Lenkanforderungssignale ignoriert und nicht umsetzt.

Es wird daher ein bevorzugt gegenüber dem elektrischen Bremswertgeber 67 zusätzlicher Signalgeber 88 vorgesehen, welcher in Bezug auf die elektro-pneumatische Betriebsbremseinrichtung 124 vom gleichen ersten elektrischen Versorgungskreis 126 mit elektrischer Energie versorgt wird und erkennt, dass der Fahrer bremsen will. In diesem Fall wird auch bei erkanntem Fehler in der Lenkeinrichtung 26 kein Lenkbremseingriff ausgeführt, da der Fahrer offensichtlich an seinem Platz ist und die Kontrolle übernehmen kann. Die Bremsung erfolgt dann nur mit den pneumatischen Betriebsbremskreisen der elektropneumatischen Betriebsbremseinrichtung 124.

Gemäß einer vierten Ausführungsform ist die elektropneumatische Betriebsbremsventileinrichtung 124 bzw. deren Bremssteuergerät EBS/ABS-ECU zusätzlich von dem ersten, die erste elektrische Energiequelle 126 beinhaltenden Energiequellenkreis mit elektrischer Energie versorgt. Dabei wird der Bremswertgeber 67 der Betriebsbremsventileinrichtung1 über die Energiequellesleitung 92 von der zweiten elektrischen Energiequelle 128 stromversorgt.

Bei der dritten und vierten Ausführungsform erhält der elektrische Betriebsbremskreis der elektro-pneumatischen Betriebsbremseinrichtung 124 auch bei Ausfall des ersten elektrischen Versorgungskreises oder der ersten elektrischen Energiequelle 126 die Fahrerbremsanforderung und kann diese umsetzen. Dadurch können die Bremsdrücke in den Radbremsaktuatoren 118, 120 zur Lenkbremsung entsprechend modifiziert werden und somit sowohl eine Fahrerbremsanforderung als auch eine Lenkanforderung gleichzeitig umgesetzt werden. Diese Ausführungsformen sind daher auch geeignet, eine Redundanz der Servounterstützung im Lenkgetriebe 30 der Lenkeinrichtung 26 darzustellen.

Gemäß einer weiteren Ausführungsform ist die elektronische Steuereinrichtung FBM-ECU der Betriebsbremsventileinrichtung 1 ausgebildet, dass sie einen Ausfall oder einen Fehler in dem die erste elektrische Energiequelle 126 beinhaltenden ersten elektrischen Energiequelleskreis oder im elektrischen Betriebsbremskreis der elektro-pneumatischen Betriebsbremseinrichtung 124 erkennt, wobei dann die Steuereinrichtung FBM-ECU die Betriebsbremsventileinrichtung 1 ansteuert, damit diese eventuell von der Autopiloteinrichtung 70 ausgesteuerten Bremsanforderungssignale in Form von Bremseingriffen an den Radbremsaktuatoren 118, 120 umsetzt.

Weiterhin ist die Funktionsweise der der elektropneumatischen Betriebsbremseinrichtung 124 wie folgt: Bei intaktem vorrangigem elektrischem Betriebsbremskreis der elektropneumatischen Betriebsbremseinrichtung 124 wird bei einer Fahrerbremsanforderung durch Betätigung des Betriebsbremsbetätigungsorgans 10 ein elektrisches Bremsanforderungssignal mittels der Bremswertgeber 67 in der Betriebsbremsventileinrichtung 1 erzeugt und in die zusätzliche elektronische Steuereinrichtung FBM-ECU der Betriebsbremsventileinrichtung 1 eingesteuert, wo diese Signale aufbereitet und über den Datenbus 122 in die elektronische Bremssteuereinrichtung EBS/ABS-ECU eingeleitet werden. Dort werden die Signale durch höhere Funktionen wie z.B. lastabhängige Bremskraftregelung (ALB), Differenzschlupfregelung etc. korrigiert und dann von dort jeweils ein einen Soll-Bremsdruck repräsentierendes Signal an die Druckregelmodule 114, 166 bzw. TCM eingesteuert, wo durch eine entsprechende Betätigung der jeweils dort vorhandenen Einlass-/Auslassventilkombinationen aus dem Vorratsdruck ein entsprechender Bremsdruck moduliert und in die Radbremszylinder 118, 120 geleitet wird, um diese entsprechend zuzuspannen. Mittels der in den Moduln 114, 116, TCM integrierten Drucksensoren wird der Ist-Bremsdruck gemessen und durch Vergleich mit dem Soll-Bremsdruck, der als diesen repräsentierendes Signal in den lokalen Steuergeräten vorliegt, im Sinne einer Bremsdruckregelung angepasst. Die genannten Vorgänge laufen daher in dem vorrangigen elektrischen Betriebsbremskreis ab.

Parallel hierzu wird durch die Betätigung des Betriebsbremsbetätigungsorgans 10 in den beiden pneumatischen Kanälen 132, 134 und dann auch in den dort angeschlossenen Druckleitungen 44, 45 in oben bereits beschriebener Weise ein Bremsdruck erzeugt, welcher aber noch durch die bestromt in Sperrstellung geschalteten Backup-Magnetventile in den Moduln 114, 116, TCM zurückgehalten werden.

Wenn nun ein Fehler oder Defekt in dem vorrangigen elektrischen Betriebsbremskreis auftritt, sei es dass die erste Energiequelle 126, die elektronische Bremssteuereinrichtung EBS/ABS-ECU oder eines der lokalen Steuergeräte in den Moduln 114, 116, TCM ausfällt, so schalten die in diesen Moduln integrierten Backup-Magnetventile nun unbestromt in ihre Durchlassstellung, wodurch die in den Druckleitungen 44, 45 anstehenden Bremsdrücke durch die Moduln 114, 116, TCM hindurch an die Radbremszylinder 118, 120 bzw. an den Kupplungskopf "Bremse" geleitet werden, um im Zugfahrzeug bzw. im Anhänger die Radbremsen zuzuspannen. Damit können die Bremsen bei einem Defekt im elektrischen Betriebsbremskreis bisher allerdings nur durch den Fahrer und dann nur rein pneumatisch betätigt werden.

Darüber hinaus ist die elektronische Steuereinrichtung FBM-ECU der elektropneumatischen Betriebsbremsventileinrichtung 1 ausgebildet, dass wenn ein Fehler oder ein Ausfall des vorrangigen elektrischen Betriebsbremskreises der elektropneumatischen Betriebsbremseinrichtung festgestellt worden ist und wenn eine Bremsanforderung vorliegt, sie die erste Magnetventileinrichtung 52b ansteuert, um wie oben beschrieben, eine zweite Betätigungskraft am Steuerkolben 12 zu erzeugen, welche auch ohne Fahrerbremsanforderung in der Lage ist, den Ventilkörper 36 vom Einlasssitz 64 abzuheben, um die zu den Moduln 114, 116, TCM führenden Druckleitungen 44, 45 mit einem entsprechend der zweiten Betätigungskraft gebildeten Bremsdruck zu belüften. Da die dortigen Backup-Magnetventile unbestromt in ihre Durchlassstellungen geschaltet sind, gelangt dieser Bremsdruck dann in die Radbremszylinder 118, 120 bzw. in den Kupplungskopf "Bremse" 148.

Ein Ausfall oder ein Fehler des elektrischen Betriebsbremskreises wird insbesondere im Rahmen einer Selbstüberwachung durch die elektronische Bremssteuereinrichtung EBS/ABS-ECU der elektropneumatischen Betriebsbremseinrichtung 124 selbst oder im Rahmen einer Fremdüberwachung durch die elektronische Steuereinrichtung FBM-ECU der elektropneumatischen Betriebsbremsventileinrichtung 1 festgestellt. Denkbar ist aber auch eine Fremdüberwachung durch eine elektronische Steuereinrichtung eines beliebigen dritten Systems. Die Kommunikation erfolgt dabei bevorzugt über den Datenbus 122. Da die elektronische Steuereinrichtung FBM-ECU der Betriebsbremsventileinrichtung 1 von der von der ersten Energiequelle 126 unabhängigen zweiten Energiequelle 128 stromversorgt wird, wird diese Funktionalität auch nicht durch einen Ausfall der ersten Energiequelle 126 verhindert.

Die zweite elektrische Energiequelle kann beispielsweise durch eine separate Batterie, (Doppelschicht-) Kondensatoren, einen weiteren Energiespeicher oder auch ein eigenes Stromerzeugungsgerät (z.B. druckluftbetriebener Generator) dargestellt werden. Die zweite Energiequelle wird bevorzugt auf Ladekapazität und Funktionsfähigkeit überwacht (SOC, SOH, regelmäßiges Laden/Entladen). Die kann beispielsweise mittels der elektronischen Bremssteuereinrichtung EBS/ABS-ECU der elektropneumatischen Betriebsbremseinrichtung 124, die elektronische Steuereinrichtung FBM-ECU der Betriebsbremsventileinrichtung 1 oder mittels eines sonstigen Systems wie z.B. die Batterieüberwachung einer Hybridantriebssteuerung des Fahrzeugs erfolgen.

Die Bremsanforderung kann dabei von einem beliebigen System des Fahrzeugs stammen, hier insbesondere von der Autopiloteinrichtung 70 oder beispielsweise auch von einer Fahrzeugfolgeregelung (ACC, Adaptive Cruise Control), durch welche der Abstand bzw. die Relativgeschwindigkeit zu einem vorausfahrenden Fahrzeug konstant gehalten wird. Dann kann die Funktionalität eines solchen ACC-Systems auch dann aufrechterhalten werden, wenn der elektrische Betriebsbremskreis der Betriebsbremsvorrichtung 124 ausgefallen ist.

Die automatisch generierte Bremsanforderung bzw. das automatisch generierte Bremsanforderungssignal wird dann als elektrisches Signal über die Schnittstelle 13 in die Steuereinrichtung FBM-ECU der Betriebsbremsventileinrichtung 1 eingesteuert, um die zweite Betätigungskraft am Steuerkolben 12 zu erzeugen. Da diese Schnittstelle 13 bevorzugt an den Datenbus 122 angeschlossen ist, über welche nicht nur die Kommunikation mit der elektronischen Steuereinrichtung EBS/ABS-ECU der Betriebsbremseinrichtung 124 sondern auch mit elektronischen Steuereinrichtungen einer Anzahl von weiteren elektronischen Fahrzeugsystemen erfolgt, welche insbesondere wenigstens ein Fahrerassistenzsystem wie ACC beinhalten, kann das Bremsanforderungssignal von einem beliebigen System des Zugfahrzeugs automatisch generiert werden.

Wie oben ausgeführt, wird wenigstens bei einem festgestellten Fehler oder Ausfall der ersten elektrischen Energiequelle 126 und/oder der elektronischen Bremssteuereinrichtung EBS/ABS-ECU die zusätzliche elektronische Steuereinrichtung FBM-ECU von der Autopiloteinrichtung 70 gemäß deren Bremswirkungsvorgabe, z.B. im Rahmen einer sich als notwendig erweisenden Notbremsung angesteuert, um eine redundant ausgelöste Abbremsung des in Fahrt befindlichen Fahrzeugs durch Einsteuern von Bremsdruck in die Radbremsaktuatoren 118, 120 durchzuführen.

Wie aus Fig.1 hervorgeht, wird von der zweiten elektrischen Energiequelle 128 auch eine Sensoreinrichtung 139 mit elektrischer Energie versorgt, mit deren Hilfe während der redundant ausgelöste Abbremsung ein übermäßiger Bremsschlupf detektierbar ist und welche auch von der üblichen ABS-Sensorik verschieden ist, die bedingt durch den Fehler oder Ausfall der ersten elektrischen Energiequelle 126 und/oder der elektronischen Bremssteuereinrichtung EBS/ABS-ECU nicht mehr funktionsfähig ist. Diese Sensoreinrichtung 139 beinhaltet Sensoren, welche in der Regel bereits bei modernen Fahrzeugen vorhanden sind und daher nicht mehr zusätzlich vorgesehen werden müssen und kann verschiedene Varianten aufweisen.

Die Sensoreinrichtung 139 ist bevorzugt an den Datenbus 122 angeschlossen, an welchen auch die zusätzliche elektronische Steuereinrichtung FBM-ECU und auch die elektronische Bremssteuereinrichtung EBS/ABS-ECU angeschlossen sind, damit Sensordaten der Sensoreinrichtung 139, wie sie weiter unter näher beschrieben werden in die zusätzliche elektronische Steuereinrichtung FBM-ECU eingesteuert werden können.

Gemäß einer ersten, hier nicht gezeigten Variante weist die Sensoreinrichtung 136 wenigstens einen Längsbeschleunigungssensor auf, welcher ein die Längsbeschleunigung oder Längsverzögerung des Fahrzeugs repräsentierenden ersten Wert in das zusätzliche elektronische Steuereinrichtung FBM-ECU einsteuert sowie einen Bremsdrucksensor, der beispielsweise bereits in den Druckregelmoduln 114 und 116 vorhanden ist, welcher ein den Bremsdruck repräsentierenden zweiten Wert in das zusätzliche elektronische Steuereinrichtung FBM-ECU einsteuert. Die zusätzliche elektronische Steuereinrichtung FBM-ECU kann dann während der redundant ausgelösten Abbremsung einen übermäßigen Bremsschlupf bei Vorliegen einer eine erlaubte oder vorgegebene Abweichung übersteigenden Abweichung einer Relation, eines Verhältnisses oder eines Zusammenhangs zwischen dem ersten Wert und dem zweiten Wert von einer erwarteten oder vorgegebenen Relation, von einem erwarteten oder vorgegebenen Verhältnis oder von einem erwarteten oder vorgegebenen Zusammenhang zwischen dem ersten Wert und dem zweiten Wert detektieren.

Bei der ersten Variante wird daher eine vorhandene Korrelation aus dem in die Radbremsaktuatoren 118, 120 eingesteuertem Bremsdruck und der hieraus resultierenden Fahrzeuglängsbeschleunigung genutzt, um unzulässiges Bremsblockieren der Räder zu erkennen. Physikalischer Hintergrund dabei ist, das sich bei nicht blockierenden Rädern die Größen Bremsdruck und Fahrzeuglängsverzögerung nahezu proportional verhalten, bei bremsblockierenden Rädern jedoch nicht mehr, da dann trotz steigendem Bremsdruck die Fahrzeuglängsverzögerung konstant bleibt oder sogar etwas reduziert wird. Die Korrelation bzw. der Proportionalitätsfaktor zwischen den beiden Größen wird wenigstens durch die Masse des Fahrzeugs gebildet.

Gemäß einer zweiten, hier ebenfalls nicht dargestellten Variante weist die Sensoreinrichtung einen Gierratensensor auf, welcher ein die Ist-Gierrate des Fahrzeugs repräsentierenden dritten Wert in die zusätzliche elektronische Steuereinrichtung FBM-ECU einsteuert, sowie einen Lenkradwinkelsensor oder einen Lenkwinkelsensor, welcher ein die Soll-Gierrate des Fahrzeugs repräsentierenden vierten Wert in das zusätzliche elektronische Steuereinrichtung FBM-ECU einsteuert. Die zusätzliche elektronische Steuereinrichtung FBM-ECU kann dann während der redundant ausgelösten Abbremsung einen übermäßigen Bremsschlupf bei einem Überschreiten einer vorbestimmten Schwelle durch die Differenz zwischen dem dritten Wert und dem vierten Wert detektieren.

Bei dieser zweiten Variante stellt daher ein übermäßiges Überschreiten der Soll-Gierrate, welche hier abhängig vom Lenkradwinkel oder Lenkwinkel ist, durch die Ist-Gierrate, welche mittels des Gierratensensors ermittelt wird, ein Indiz für ein Vorliegen von übermäßigem Bremsblockieren bei einer während der redundant ausgelösten Abbremsung eventuell vorliegenden Kurvenfahrt dar, weil ein solches zu verringerten Seitenführungskräften führt, welche wiederum eine größere Gierrate bewirken.

Gemäß einer dritten, hier ebenfalls nicht dargestellten Variante weist die Sensoreinrichtung 139 einen Drehzahlsensor auf, welcher ein die Ist-Drehzahl einer Getriebeausgangswelle eines Getriebes des Fahrzeugs repräsentierenden fünften Wert in das zusätzliche elektronische Steuereinrichtung FBM-ECU einsteuert und einen Raddrehzahlsensor, welcher ein die Raddrehzahl wenigstens eines der nicht angetriebenen Räder des Fahrzeugs repräsentierenden sechsten Wert in die zusätzliche elektronische Steuereinrichtung FBM-ECU einsteuert. Dann kann die zusätzliche elektronische Steuereinrichtung FBM-ECU während der redundant ausgelösten Abbremsung einen übermäßigen Bremsschlupf bei Vorliegen einer eine erlaubte Abweichung übersteigenden Abweichung einer Relation, eines Verhältnisses oder eines Zusammenhangs zwischen dem fünften Wert und dem sechsten Wert von einer erwarteten oder vorgegebenen Relation, von einem erwarteten oder vorgegebenen Verhältnis oder von einem erwarteten oder vorgegebenen Zusammenhang zwischen dem fünften Wert und dem sechsten Wert detektieren.

Die dritte Variante nutzt daher den normalerweise, d.h. bei nicht oder nur sehr gering vorhandenem Bremsblockieren festen Zusammenhang zwischen der Drehzahl einer Getriebeausgangswelle, welche dann angetriebene und gebremste Räder des Fahrzeugs antreibt und der Raddrehzahl wenigstens eines der nicht angetriebenen, aber gebremsten Räder des Fahrzeugs oder der Fahrzeugkombination. Wenn aber beispielsweise übermäßiges Bremsblockieren an der angetriebenen Achse auftritt, so sinkt die Drehzahl an der Getriebeausgangswelle ab, während sich die Raddrehzahl an einer nicht angetriebenen Achse z.B. aufgrund eines dort lokal höheren Reibwerts nicht reduziert. Folglich stellt eine Änderung des üblichen Zusammenhangs der beiden Größen ein Indiz für das Vorliegen von Bremsblockieren an der Hinterachse dar.

Gemäß einer vierten, hier ebenfalls nicht dargestellten Variante weist die Sensoreinrichtung 139 einen Sensor auf, welcher einen ein Bremsnicken des Fahrzeugs oder der Fahrzeugkombination repräsentierenden siebten Wert in das zusätzliche elektronische Steuereinrichtung FBM-ECU einsteuert, wobei dieser Sensor das Bremsnicken direkt oder indirekt erfassen kann und insbesondere einen Radarsensor oder einen Kamerasensor darstellt, welcher die Nickbewegung des Fahrzeugs in Bezug auf die Umwelt als Referenz erkennen kann, weil diese sich in vertikaler Richtung nicht bewegt. Zum Erfassen des Bremsnickens können alternativ oder zusätzlich auch Sensoren verwendet werden, welcher die mit dem Bremsen einhergehende Einfederung z.B. an der Vorderachse und/oder die mit dem Bremsen einhergehende Ausfederung an der Hinterachse messen. Weiterhin umfasst die Sensoreinrichtung 139 in der vierten Variante einen Längsbeschleunigungssensor, welcher einen die Längsbeschleunigung oder Längsverzögerung des Fahrzeugs repräsentierenden achten Wert in die zusätzliche elektronische Steuereinrichtung FBM-ECU einsteuert.

Die zusätzliche elektronische Steuereinrichtung kann dann während der redundant ausgelösten Abbremsung einen übermäßigen Bremsschlupf bei Vorliegen einer eine erlaubte Abweichung übersteigenden Abweichung einer Relation, eines Verhältnisses oder eines Zusammenhangs zwischen dem siebten Wert und dem achten Wert von einer erwarteten oder vorgegebenen Relation, von einem erwarteten oder vorgegebenen Verhältnis oder von einem erwarteten oder vorgegebenen Zusammenhang zwischen dem siebten Wert und dem achten Wert detektieren.

Der vierten Variante liegt der Gedanke zugrunde, dass bei einem übermäßigen Bremsblockieren Nickeffekte des Fahrzeugs wegen der dann geringeren Bremskräfte weniger ausgeprägt sind als bei geringem oder nicht auftretendem Bremsblockieren.

Gemäß einer fünften, hier ebenfalls nicht gezeigten Variante weist die Sensoreinrichtung 139 wenigstens einen Sensor auf, welcher einen eine Ist-Lateralbewegung des Fahrzeugs oder der Fahrzeugkombination repräsentierenden neunten Wert in die zusätzliche elektronische Steuereinrichtung einsteuert. Bei einem solchen Sensor handelt es sich bevorzugt um einen Kamerasensor und/oder einen Radarsensor, welcher eine laterale Bewegung des Fahrzeugs in Bezug zur Umgebung als stationäre Referenz feststellen kann. Weiterhin beinhaltet die Sensoreinrichtung 139 wenigstens einen Sensor, welcher einen eine Soll-Lateralbewegung des Fahrzeugs repräsentierenden zehnten Wert in das zusätzliche elektronische Steuereinrichtung einsteuert, wobei dieser wenigstens eine Sensor beispielsweise den Lenkwinkel oder Lenkradwinkel und auch die Geschwindigkeit erfasst. Dann kann die zusätzliche elektronische Steuereinrichtung FBM-ECU während der redundant ausgelösten Abbremsung einen übermäßigen Bremsschlupf bei einem Überschreiten einer vorbestimmten Schwelle durch die Differenz zwischen dem neunten Wert und dem zehnten Wert detektiert.

Der fünften Variante liegt der Gedanke zugrunde, dass bei einem übermäßigen Bremsblockieren laterale Fahrzeugbewegungen bei einer während der redundant ausgelösten Abbremsung eventuell vorliegenden Kurvenfahrt, welche dann beispielsweise durch einen bestimmten Schwimmwinkel und/oder Gierwinkel charakterisiert sind, oberhalb der Schwelle liegen, weil dann die Seitenführungskräfte der gebremsten Räder relativ gering sind und sich demzufolge auch größere Lateralbewegungen ergeben. Mit beispielsweise dem Lenkradwinkelsensor und/oder dem Lenkwinkelsensor wird demgegenüber die Soll-Lateralbewegung erfasst.

Mit Hilfe einer oder mehrerer der oben beschriebenen Varianten von Sensoreinrichtungen 139, welche nicht von einem Ausfall oder Fehler der ersten elektrischen Energiequelle 126 oder der elektronischen Bremssteuereinrichtung EBS/ABS-ECU betroffen sind, wird daher ein übermäßiges Bremsschlupfen während der redundant ausgelösten Abbremsung von der zusätzlichen elektronischen Steuereinrichtung FBM-ECU detektiert, welche ebenfalls nicht von einem Ausfall oder Fehler der ersten elektrischen Energiequelle 126 oder der elektronischen Bremssteuereinrichtung EBS/ABS-ECU betroffen ist. Denn die Sensoreinrichtung 139 wird, wie **Fig.1** zeigt, wie der Datenbus 122 und die zusätzliche elektronische Steuereinrichtung FBM-ECU von der zweiten elektrischen Energiequelle 128 mit elektrischer Energie versorgt. Die einzelnen Sensoren der Sensoreinrichtung 139 sind in der Regel über das Fahrzeug je nach ihrem Zweck verteilt angeordnet.

Wie oben bereits beschrieben, kann die Autopiloteinrichtung 70 im Falle eines Fehler oder Ausfalls des elektrischen Bremskreises die zusätzliche elektronische Steuereinrichtung FBM-ECU durch ein elektrisches Signal, welches eine Bremswirkungsvorgabe und hier insbesondere eine Bremsdruckvorgabe repräsentiert, ansteuern, um durch Druckbeaufschlagung der Radbremsaktuatoren 118, 120 eine dann redundant ausgelöste Abbremsung zu erzielen.

Die zusätzliche elektronische Steuereinrichtung FBM-ECU ist dabei ausgebildet, dass wenn sie während der redundant ausgelösten Abbremsung einen übermäßigen Bremsschlupf in einer oder mehrerer der oben beschriebenen Varianten detektiert hat, sie durch Ansteuern der Magnetventileinrichtung 52 in der oben beschriebenen Weise einen Bremsdruck in die Radbremsaktuatoren 118, 120 einsteuert, welcher einer Bremswirkung entspricht, die geringer als die Bremswirkungsvorgabe der Autopiloteinrichtung 70 ist. Insbesondere wird daher bei einem Auftreten von übermäßigem Bremsschlupf während der redundant ausgelösten Abbremsung ein Bremsdruck in die Radbremsaktuatoren 118, 120 eingesteuert, der geringer ist als der Bremsdruck, welcher der Bremswirkungsvorgabe und insbesondere der Bremsdruckvorgabe der Autopiloteinrichtung 70 entspricht. Durch diese Maßnahme wird übermäßiges Bremsblockieren ähnlich wie bei einem konventionellen, aber hier wegen des Ausfalls oder Fehlers des elektrischen Bremskreises nicht mehr funktionsfähigen ABS (Bremsschlupfregelung) beseitigt und bei einer während der redundant ausgelösten Abbremsung eventuell vorliegenden Kurvenfahrt die Seitenführungskräfte erhöht.

Besonders bevorzugt beinhaltet die Reduktion der Bremswirkung gegenüber der Bremswirkungsvorgabe einen Wechsel zwischen Reduzieren und Steigern des Bremsdrucks in den Radbremsaktuatoren 118, 120 durch Ansteuern der Magnetventileinrichtung 52 mittels der zusätzlichen elektronischen Steuereinrichtung FBM-ECU. Mit anderen Worten findet ähnlich wie bei einem konventionellen ABS eine Modulation des Bremsdrucks beispielsweise durch zyklisches Steigern und Absenken des Bremsdrucks statt, wobei sich im zeitlichen Mittel gegenüber der Bremswirkungsvorgabe ein geringerer Bremsdruck ergibt.

Bevorzugt ist die elektronische Steuereinrichtung FBM-ECU ausgebildet, dass sie im Rahmen eines ersten Erkennungsmodus einen ersten Wert für den Bremsdruck, bei welchem ein übermäßiger Bremsschlupf innerhalb des ersten Erkennungsmodus erstmals aufgetreten ist, als ersten erkannten kritischen Bremsdruckwert z.B. in einem integrierten Speicher speichert und dann durch Ansteuern der Magnetventileinrichtung 52 in Zyklen den Bremsdruck lediglich bis zu dem ersten erkannten kritischen Bremsdruckwert steigert und dann wieder reduziert. Folglich "merkt" sich die zusätzliche elektronische Steuereinrichtung FBM-ECU im Rahmen der Bremsdruckerhöhung den "Eck"-Bremsdruck, bei welchem dann ein übermäßiges Bremsblockieren erstmals aufgetreten ist. Weiterhin ist dieser erste Wert für den Bremsdruck geringer als der Bremsdruck, welcher der Bremswirkungsvorgabe des der Autopiloteinrichtung 70 entspricht. Dieser erste Wert für den Bremsdruck stellt dann auch ein Maß für den gerade vorliegenden Reibwert der Fahrbahnoberfläche dar. Mit Hilfe des gespeicherten ersten Werts für den Bremsdruck kann dann die Geschwindigkeit der Bremsdruckanpassung gesteigert werden, indem dieser erste Wert für den Bremsdruck als neue Vorgabe für den Bremsdruck ausgesteuert wird.

Weiterhin kann die zusätzliche elektronische Steuereinrichtung FBM-ECU ausgebildet sein, dass sie zeitlich nach dem ersten Erkennungsmodus wenigstens einen zweiten Erkennungsmodus durchführt, um einen zweiten Wert für den Bremsdruck, bei welchem ein übermäßiger Bremsschlupf erstmals innerhalb des zweiten Erkennungsmodus aufgetreten ist als zweiten erkannten kritischen Bremsdruckwert zu speichern und dann durch Ansteuern der Magnetventileinrichtung in Zyklen den Bremsdruck lediglich bis zu diesem zweiten erkannten kritischen Bremsdruckwert zu steigern und dann wieder zu reduzieren. Dies ist insbesondere dann vorteilhaft, wenn sich der Reibwert der Fahrbahn noch während der redundant ausgelösten Abbremsung nach einiger Zeit ändert, wobei diese Reibwertänderung dann durch den zweiten Wert für den Bremsdruck repräsentiert wird.

**Fig.9a** und **Fig.9b** beziehen sich auf die oben beschriebene erste Variante der Sensoreinrichtung 139. Dabei kann die zusätzliche elektronische Steuereinrichtung FBM-ECU, falls sie während der redundant ausgelösten Abbremsung einen übermäßigen Bremsschlupf durch Vorliegen einer eine erlaubte oder vorgegebene Abweichung übersteigenden Abweichung einer Relation, eines Verhältnisses oder eines Zusammenhangs zwischen der Längsbeschleunigung aₓ des Fahrzeugs (**Fig.9a**) und dem Bremsdruck p in den Radbremsaktuatoren 118, 120 (**Fig.9b**) von einer erwarteten oder vorgegebenen Relation, von einem erwarteten oder vorgegebenen Verhältnis oder von einem erwarteten oder vorgegebenen Zusammenhang zwischen der Längsverzögerung aₓ und dem Bremsdruck p detektiert, sie durch Ansteuern der Magnetventileinrichtung 52 in einem zyklischen Wechsel den Bremsdruck zunächst so lange bis maximal entsprechend der Bremswirkungsvorgabe der Autopiloteinrichtung 70 erhöht, bis die Längsverzögerung aₓ nicht mehr weiter zunimmt und einen maximalen Wert angenommen hat und danach den Bremsdruck wieder verringert, bis die Längsverzögerung aₓ wieder abnimmt.

In zeitlicher Abfolge wird gemäß **Fig.9b** nach Auslösung der redundanten Abbremsung der Bremsdruck p solange gesteigert, bis die Längsverzögerung aₓ nicht mehr zunimmt und einen maximalen Wert aₘₐₓ angenommen hat. Dabei ist In **Fig.9a** mit t_{L} die Zeitdauer bezeichnet, die von den Routinen in der zusätzliche elektronische Steuereinrichtung FBM-ECU benötigt wird, um unter dem gegebenen Reibwert der Fahrbahn diese maximal mögliche Längsverzögerung aₘₐₓ zu erkennen. Dann stellt der Bremsdruck p_{stabil-max}, bei dem die Längsverzögerung aₓ nicht mehr weiter zunimmt und den maximalen Wert aₘₐₓ angenommen hat eine Druck- oder Stabilitätsgrenze dar, bei welcher die Längsverzögerung aₓ "gesättigt" ist. Danach wird der Bremsdruck p wieder verringert, bis die Längsverzögerung aₓ wieder abnimmt, z.B. auf einen minimalen Wert aₘᵢₙ. Bei der anschließenden Erhöhung des Bremsdrucks p wird dieser wiederum solange erhöht, bis die Längsbeschleunigung aₓ nicht mehr weiter zunimmt. Damit stellt sich ein Wechsel zwischen Steigerung des Bremsdrucks p und Senken des Bremsdrucks p ein.

Weiterhin ist die zusätzliche elektronische Steuereinrichtung FBM-ECU bevorzugt ausgebildet sein, dass sie während der redundant ausgelösten Abbremsung einen übermäßigen Bremsschlupf auch auf der Basis von Daten detektiert, welche bereits vor dem Auftreten des Fehlers oder Ausfalls an die zusätzliche elektronische Steuereinrichtung FBM-ECU übermittelt und in einem Speicher gespeichert worden sind. Eine solche Übermittlung findet hier beispielsweise mittels des Datenbusses 122 statt, an welchen die zusätzliche elektronische Steuereinrichtung FBM-ECU wie auch die elektronische Bremssteuereinrichtung EBS/ABS-ECU sowie weitere Steuereinrichtungen angeschlossen, welche von verschiedenen Sensoren mit Sensordaten versorgt sind.

Dabei können die Daten wenigstens eine der folgenden Daten beinhalten: Die Masse des Fahrzeugs, die Achslasten und/oder die Achslastverteilung des Fahrzeugs, der Reibwert der von dem Fahrzeug befahrenen Fahrbahn. insbesondere kann dann die zusätzliche elektronische Steuereinrichtung FBM-ECU ausgebildet sein, dass sie während der redundant ausgelösten Abbremsung den Bremsdruck p abhängig von den Achslasten achsweise angepasst.

Bevorzugt kann auch die zusätzliche elektronische Steuereinrichtung (FBM ECU) ausgebildet sein, dass sie während der redundant ausgelösten Abbremsung zusätzlich eine Aktivierung eines Retarders und/oder eine Reduzierung der Antriebsleistung eines Antriebsmotors des Fahrzeugs durchführt.

### Bezugszahlenliste

- 1: Betriebsbremsventileinrichtung
- 2: Gehäuse
- 4: Stößelkolben
- 5: Stößelkolbenstange
- 6: Stößelaufnahme
- 7: obere Steuerkolbenstange
- 8: Stößel
- 10: Betriebsbremsbetätigungsorgan
- 12: Steuerkolben
- 13: elektrischer Anschluss
- 14: Stößelkolben - Druckfeder
- 16: untere Steuerkolbenstange
- 22: Steuerkammer
- 24: Raddrehzahlsensor
- 26: Lenkeinrichtung
- 28: Kenkrad
- 30: Lenkgetriebe
- 32: Auslasssitz
- 34: Doppelsitzventil
- 36: Ventilkörper
- 38: Arbeitskammer
- 40: Entlüftungsanschluss
- 42: Anschluss Betriebsbremskreis
- 44: Bremsdruckleitung
- 45: Bremsdruckleitung
- 46: Steuerkolben - Druckfeder
- 48: Anschluss
- 50: Ausgangsanschluss
- 52: erste Magnetventileinrichtung
- 54: Eingangsanschluss
- 56: Vorratsdruckleitung
- 57: Vorratsdruckleitung
- 58: Vorratsanschluss
- 60: Vorratskammer
- 62: Ventilkörper - Druckfeder
- 64: Einlasssitz
- 66: Innenwandung
- 67: Wegsensor
- 68: Lenkspindel
- 70: Autopiloteinrichtung
- 72: Lenkaktuator
- 74: Lenkradwinkelsensor
- 76: Lenkradmoment
- 78: Lenkgestänge
- 80a/b: Achsschenkel
- 82: Lenkmoment
- 84: Energiequellesleitung
- 86: Energiequellesleitung
- 88: Signalgeber
- 90: Signalleitung
- 92: Energiequellesleitung
- 94: Energiequellesleitung
- 96: Energiequellesleitung
- 104: Proportionalventil
- 106: 2/2-Wege-Magnetventil
- 108: 2/2-Wege-Magnetventil
- 110: 3/2-Wege-Magnetventil
- 112: 2/2-Wege-Magnetventil
- 114: Druckregelmodul
- 116: Druckregelmodul
- 118: Radbremszylinder
- 120: Radbremszylinder
- 122: Datenbus
- 124: Betriebsbremseinrichtung
- 126: erste Energiequelle
- 128: zweite Energiequelle
- 130: elektrischer Kanal
- 132: pneumatischer Vorderachskanal
- 134: pneumatischer Hinterachskanal
- 136: Bremsdruckleitung
- 137: Bremsdruckleitung
- 138: ABS-Drucksteuerventile
- 139: Sensoreinrichtung
- 140: Druckluftvorrat
- 142: Druckluftvorrat
- 148: Kupplungskopf "Bremse"
- 150: Kupplungskopf "Vorrat"
- 152: elektrische Steuerleitung
- 154a/b: Mikroprozessoren
- 156a, 156b: Mikroprozessoren

## Patentansprüche

1. Elektrische Ausrüstung eines Fahrzeugs oder einer Fahrzeugkombination aus einem Zugfahrzeug und wenigstens einem Anhängerfahrzeug, wobei die elektrische Ausrüstung eine durch eine elektronische Bremssteuereinrichtung (EBS/ABS-ECU) elektrisch steuerbare und druckmittelbetätigte Betriebsbremseinrichtung und ein Fahrerassistenzsystem oder eine Autopiloteinrichtung (70) beinhaltet, welches oder welche die Betriebsbremseinrichtung unabhängig vom Fahrer gemäß einer Bremswirkungsvorgabe automatisch steuert oder regelt, wobei
a) in die elektronische Bremssteuereinrichtung (EBS/ABS-ECU) wenigstens eine Bremsschlupfregelung (ABS) integriert ist, und wobei
b) die elektronische Bremssteuereinrichtung (EBS/ABS-ECU) von einer ersten elektrischen Energiequelle (126) mit elektrischer Energie versorgt ist, und wobei
c) wenigstens eine gegenüber der elektronischen Bremssteuereinrichtung (EBS/ABS-ECU) zusätzliche elektronische Steuereinrichtung (FBM ECU) vorgesehen ist, welche von einer zweiten, von der ersten elektrischen Energiequelle (126) der elektronischen Bremssteuereinrichtung (EBS/ABS-ECU) unabhängigen elektrische Energiequelle (128) mit elektrischer Energie versorgt ist und welche eine Magnetventileinrichtung (52) steuert, über welche Bremsdruck in Radbremsaktuatoren (118, 120) einsteuerbar ist, und wobei
d) wenigstens bei einem festgestellten Fehler oder Ausfall der ersten elektrischen Energiequelle (126) und/oder der elektronischen Bremssteuereinrichtung (EBS/ABS-ECU) die zusätzliche elektronische Steuereinrichtung (FBM ECU) von dem Fahrerassistenzsystem oder von der Autopiloteinrichtung (70) gemäß der Bremswirkungsvorgabe angesteuert wird, um eine redundant ausgelöste Abbremsung des in Fahrt befindlichen Fahrzeugs oder der in Fahrt befindlichen Fahrzeugkombination durch Einsteuern von Bremsdruck in die Radbremsaktuatoren (118, 120) durchzuführen, und wobei
e) eine von der zweiten elektrischen Energiequelle (128) mit elektrischer Energie versorgte Sensoreinrichtung (139) vorgesehen ist, mit deren Hilfe während der redundant ausgelösten Abbremsung ein übermäßiger Bremsschlupf detektierbar ist, und wobei
f) die zusätzliche elektronische Steuereinrichtung (FBM ECU) weiterhin ausgebildet ist, dass wenn sie während der redundant ausgelösten Abbremsung einen übermäßigen Bremsschlupf detektiert hat, sie durch Ansteuern der Magnetventileinrichtung (52) einen Bremsdruck in die Radbremsaktuatoren (118, 120) einsteuert, welcher einer Bremswirkung entspricht, die geringer als die Bremswirkungsvorgabe des Fahrerassistenzsystems oder der Autopiloteinrichtung (70) ist, **dadurch gekennzeichnet, dass**
g) die Sensoreinrichtung (139) wenigstens Folgendes beinhaltet:
g1) wenigstens einen ersten Sensor, welcher ein die Längsbeschleunigung oder Längsverzögerung des Fahrzeugs oder der Fahrzeugkombination repräsentierenden ersten Wert in die zusätzliche elektronische Steuereinrichtung (FBM ECU) einsteuert sowie wenigstens einen zweiten Sensor, welcher ein den Bremsdruck repräsentierenden zweiten Wert in die zusätzliche elektronische Steuereinrichtung (FBM ECU) einsteuert, wobei die zusätzliche elektronische Steuereinrichtung (FBM ECU) ausgebildet ist, dass sie während der redundant ausgelösten Abbremsung einen übermäßigen Bremsschlupf bei Vorliegen einer eine erlaubte oder vorgegebene Abweichung übersteigenden Abweichung einer Relation, eines Verhältnisses oder eines Zusammenhangs zwischen dem ersten Wert und dem zweiten Wert von einer erwarteten oder vorgegebenen Relation, von einem erwarteten oder vorgegebenen Verhältnis oder von einem erwarteten oder vorgegebenen Zusammenhang zwischen dem ersten Wert und dem zweiten Wert detektiert, und/oder
g2) wenigstens einen dritten Sensor, welcher ein die Drehzahl einer Getriebeausgangswelle eines Getriebes des Fahrzeugs oder der Fahrzeugkombination repräsentierenden dritten Wert in die zusätzliche elektronische Steuereinrichtung (FBM ECU) einsteuert und wenigstens einen vierten Sensor, welcher ein die Raddrehzahl wenigstens eines der nicht angetriebenen aber gebremsten Räder des Fahrzeugs oder der Fahrzeugkombination repräsentierenden vierten Wert in die zusätzliche elektronische Steuereinrichtung (FBM ECU) einsteuert, wobei die zusätzliche elektronische Steuereinrichtung (FBM ECU) ausgebildet ist, dass sie während der redundant ausgelösten Abbremsung einen übermäßigen Bremsschlupf bei Vorliegen einer eine erlaubte Abweichung übersteigenden Abweichung einer Relation, eines Verhältnisses oder eines Zusammenhangs zwischen dem dritten Wert und dem vierten Wert von einer erwarteten oder vorgegebenen Relation, von einem erwarteten oder vorgegebenen Verhältnis oder von einem erwarteten oder vorgegebenen Zusammenhang zwischen dem dritten Wert und dem vierten Wert detektiert, und/oder
g3) wenigstens einen fünften Sensor, welcher einen ein Bremsnicken des Fahrzeugs oder der Fahrzeugkombination repräsentierenden fünften Wert in die zusätzliche elektronische Steuereinrichtung (FBM ECU) einsteuert, sowie einen sechsten Sensor, welcher ein die Längsbeschleunigung oder Längsverzögerung des Fahrzeugs oder der Fahrzeugkombination repräsentierenden sechsten Wert in die zusätzliche elektronische Steuereinrichtung (FBM ECU) einsteuert, wobei die zusätzliche elektronische Steuereinrichtung (FBM ECU) ausgebildet ist, dass sie während der redundant ausgelösten Abbremsung einen übermäßigen Bremsschlupf bei Vorliegen einer eine erlaubte Abweichung übersteigenden Abweichung einer Relation, eines Verhältnisses oder eines Zusammenhangs zwischen dem fünften Wert und dem sechsten Wert von einer erwarteten oder vorgegebenen Relation, von einem erwarteten oder vorgegebenen Verhältnis oder von einem erwarteten oder vorgegebenen Zusammenhang zwischen dem fünften Wert und dem sechsten Wert detektiert, und/oder
g4) wenigstens einen siebten Sensor, welcher ein eine Ist-Lateralbewegung des Fahrzeugs oder der Fahrzeugkombination repräsentierenden siebten Wert in die zusätzliche elektronische Steuereinrichtung (FBM ECU) einsteuert, sowie wenigstens einen achten Sensor, welcher ein eine Soll-Lateralbewegung des Fahrzeugs oder der Fahrzeugkombination repräsentierenden achten Wert in die zusätzliche elektronische Steuereinrichtung (FBM ECU) einsteuert, wobei die zusätzliche elektronische Steuereinrichtung (FBM ECU) ausgebildet ist, dass sie während der redundant ausgelösten Abbremsung einen übermäßigen Bremsschlupf bei einem Überschreiten einer vorbestimmten Schwelle durch die Differenz zwischen dem siebten Wert und dem achten Wert detektiert, wobei
h) die Reduktion der Bremswirkung gegenüber der Bremswirkungsvorgabe einen Wechsel zwischen Reduzieren und Steigern des Bremsdrucks durch Ansteuern der Magnetventileinrichtung (52) mittels der zusätzlichen elektronischen Steuereinrichtung (FBM ECU) beinhaltet, und wobei
i) die zusätzliche elektronische Steuereinrichtung (FBM ECU) ausgebildet ist, dass sie im Rahmen eines ersten Erkennungsmodus einen ersten Wert für den Bremsdruck, bei welchem ein übermäßiger Bremsschlupf innerhalb des ersten Erkennungsmodus erstmals aufgetreten ist als ersten erkannten kritischen Bremsdruckwert speichert und dann durch Ansteuern der Magnetventileinrichtung (52) in Zyklen den Bremsdruck lediglich bis zu dem ersten erkannten kritischen Bremsdruckwert steigert und dann wieder reduziert, und wobei
j) die zusätzliche elektronische Steuereinrichtung (FBM ECU) ausgebildet ist, dass sie zeitlich nach dem ersten Erkennungsmodus wenigstens einen zweiten Erkennungsmodus durchführt, um einen zweiten Wert für den Bremsdruck, bei welchem ein übermäßiger Bremsschlupf erstmals innerhalb des zweiten Erkennungsmodus aufgetreten ist als zweiten erkannten kritischen Bremsdruckwert zu speichern und dann durch Ansteuern der Magnetventileinrichtung (52) in Zyklen den Bremsdruck lediglich bis zu diesem zweiten erkannten kritischen Bremsdruckwert zu steigern und dann wieder zu reduzieren.

2. Ausrüstung nach Anspruch 1, **dadurch gekennzeichnet, dass**
a) der erste Sensor einen Längsbeschleunigungssensor und der zweite Sensor einen Drucksensor beinhaltet,
b) der dritte Sensor einen Drehzahlsensor an der Getriebeausgangswelle und der vierte Sensor einen Raddrehzahlsensor beinhaltet,
c) der fünfte Sensor einen eine Einfederung des Fahrzeugs oder der Fahrzeugkombination direkt oder indirekt erfassenden Sensor und der sechste Sensor einen Längsbeschleunigungssensor beinhaltet,
d) der siebte Sensor einen Kamerasensor und/oder einen Radarsensor und der achte Sensor einen Geschwindigkeitssensor und einen Lenkradwinkelsensor oder einen Lenkwinkelsensor beinhaltet.

3. Ausrüstung nach einem der vorhergehenden Ansprüche, **dadurch gekennzeichnet, dass** die zusätzliche elektronische Steuereinrichtung (FBM ECU) ausgebildet ist, dass falls sie während der redundant ausgelösten Abbremsung einen übermäßigen Bremsschlupf durch Vorliegen einer eine erlaubte oder vorgegebene Abweichung übersteigenden Abweichung einer Relation, eines Verhältnisses oder eines Zusammenhangs zwischen dem ersten Wert und dem zweiten Wert von einer erwarteten oder vorgegebenen Relation, von einem erwarteten oder vorgegebenen Verhältnis oder von einem erwarteten oder vorgegebenen Zusammenhang zwischen dem ersten Wert und dem zweiten Wert detektiert, sie durch Ansteuern der Magnetventileinrichtung (52) in einem zyklischen Wechsel den Bremsdruck (p) zunächst so lange bis maximal entsprechend der Bremswirkungsvorgabe erhöht, bis die Längsverzögerung (aₓ) nicht mehr weiter zunimmt und einen maximalen Wert (aₘₐₓ) angenommen hat und danach den Bremsdruck (p) wieder verringert, bis die Längsverzögerung (aₓ) wieder abnimmt.

4. Ausrüstung nach einem der vorhergehenden Ansprüche, **dadurch gekennzeichnet, dass** die zusätzliche elektronische Steuereinrichtung (FBM ECU) ausgebildet ist, dass sie während der redundant ausgelösten Abbremsung einen übermäßigen Bremsschlupf auch auf der Basis von Daten detektiert, welche bereits vor dem Auftreten des Fehlers oder Ausfalls an die zusätzliche elektronische Steuereinrichtung (FBM ECU) übermittelt und in einem Speicher gespeichert worden sind.

5. Ausrüstung nach Anspruch 4, **dadurch gekennzeichnet, dass** die Daten wenigstens eine der folgenden Daten beinhalten: Die Masse des Fahrzeugs oder der Fahrzeugkombination, die Achslasten und/oder die Achslastverteilung des Fahrzeugs oder der Fahrzeugkombination, den Reibwert der von dem Fahrzeug oder der Fahrzeugkombination befahrenen Fahrbahn.

6. Ausrüstung nach Anspruch 5, **dadurch gekennzeichnet, dass** die zusätzliche elektronische Steuereinrichtung (FBM ECU) ausgebildet ist, dass sie während der redundant ausgelösten Abbremsung den Bremsdruck abhängig von den Achslasten achsweise angepasst.

7. Ausrüstung nach einem der vorhergehenden Ansprüche, **dadurch gekennzeichnet, dass** die zusätzliche elektronische Steuereinrichtung (FBM ECU) ausgebildet ist, dass sie ein Vorhandensein einer eigenen Bremsschlupfregelung in einem an das Zugfahrzeug einer Fahrzeugkombination angekoppelten Anhängerfahrzeugs erkennt und in diesem Fall während der redundant ausgelösten Abbremsung die Bremsschlupfregelung des Anhängerfahrzeugs ebenfalls zum bremsschlupfgeregelten Abbremsen der Fahrzeugkombination heranzieht.

8. Ausrüstung nach einem der vorhergehenden Ansprüche, **dadurch gekennzeichnet, dass** die zusätzliche elektronische Steuereinrichtung (FBM ECU) ausgebildet ist, dass sie während der redundant ausgelösten Abbremsung zusätzlich eine Aktivierung eines Retarders und/oder eine Reduzierung der Antriebsleistung eines Antriebsmotors des Fahrzeugs oder des Zugfahrzeugs der Fahrzeugkombination durchführt.

9. Ausrüstung nach einem der vorhergehenden Ansprüche, **dadurch gekennzeichnet, dass** die elektronische Bremssteuereinrichtung (EBS/ABS-ECU) ausgebildet ist, dass sie durch Eigenüberwachung ein Auftreten eines sie selbst betreffenden Fehlers oder eines sie selbst betreffenden Ausfalls und/oder ein Auftreten eines Fehler oder eines Ausfall der ersten elektrischen Energiequelle (126) erkennt und an die zusätzliche elektronische Steuereinrichtung (FBM ECU) meldet, oder dass die zusätzliche elektronische Steuereinrichtung (FBM ECU) ausgebildet ist, dass sie ein Auftreten eines Fehler oder eines Ausfalls der ersten elektrischen Energiequelle (126) und/oder der elektronische Bremssteuereinrichtung (EBS/ABS-ECU) erkennt, oder dass eine weitere, von der elektronischen Bremssteuereinrichtung (EBS/ABS-ECU) und von der zusätzlichen elektronischen Steuereinrichtung (FBM ECU) verschiedene Elektronik ausgebildet ist, dass sie ein Auftreten eines Fehler oder eines Ausfalls der ersten elektrischen Energiequelle (126) und/oder der elektronische Bremssteuereinrichtung (EBS/ABS-ECU) erkennt und an die zusätzliche elektronische Steuereinrichtung (FBM ECU) meldet.

10. Ausrüstung nach einem der vorhergehenden Ansprüche, **dadurch gekennzeichnet, dass** als Betriebsbremseinrichtung eine elektropneumatische Betriebsbremseinrichtung (124), insbesondere ein elektronisches oder elektronisch bremsdruckgeregeltes Bremssystem (EBS) vorgesehen ist, welches eine elektropneumatische Betriebsbremsventileinrichtung (1), die elektronische Bremssteuereinrichtung (EBS/ABS-ECU), elektropneumatische Modulatoren (114, 116) sowie pneumatische Radbremsaktuatoren (118, 120) beinhaltet, wobei
a) die elektronische Bremssteuereinrichtung (EBS/ABS-ECU) die elektropneumatischen Modulatoren (114, 116) elektrisch steuert, um pneumatische Bremsdrücke oder Bremssteuerdrücke für pneumatische Radbremsaktuatoren (118, 120) radindividuell, achsindividuell oder seitenindividuell zu erzeugen, und wobei
b) die elektropneumatische Betriebsbremsventileinrichtung (1) ein Betriebsbremsbetätigungsorgan (10) sowie innerhalb wenigstens eines elektrischen Betriebsbremskreises wenigstens einen elektrischen Kanal (130) mit wenigstens einem vom Betriebsbremsbetätigungsorgan (10) betätigbaren elektrischen Bremswertgeber (67) zum von einer Betätigung des Betriebsbremsbetätigungsorgans (10) abhängigen Aussteuern von Betätigungssignalen aufweist, sowie die die Betätigungssignale empfangende zusätzliche elektronische Steuereinrichtung (FBM-ECU), welche abhängig von den Betätigungssignalen Bremsanforderungssignale in die elektronische Bremssteuereinrichtung (EBS/ABS-ECU) einsteuert, sowie innerhalb wenigstens eines pneumatischen Betriebsbremskreises wenigstens einen pneumatischen Kanal (132, 134), bei welchem durch Betätigung des Betriebsbremsbetätigungsorgans (10) aufgrund einer Fahrerbremsanforderung wenigstens ein Steuerkolben (12) der Betriebsbremsventileinrichtung (1) mit einer ersten Betätigungskraft belastet wird und der Steuerkolben (12) wenigstens ein einen Einlasssitz (64) und einen Auslasssitz (32) beinhaltendes Doppelsitzventil (34) der Betriebsbremsventileinrichtung (1) direkt oder indirekt steuert, um pneumatische Bremsdrücke oder Bremssteuerdrücke für die pneumatischen Radbremsaktuatoren (118, 120) zu erzeugen, und wobei
c) die zusätzliche elektronische Steuereinrichtung (FBM-ECU) der elektropneumatischen Betriebsbremsventileinrichtung (1) beinhaltende Mittel (FBM-ECU, 52) zum Erzeugen einer zweiten Betätigungskraft unabhängig von einer Fahrerbremsanforderung vorgesehen sind, welche bei Vorliegen einer vom Fahrerwunsch unabhängigen Bremsanforderung in Bezug zur ersten Betätigungskraft gleichsinnig oder gegensinnig auf den wenigstens einen Steuerkolben (12) wirkt.

11. Ausrüstung nach Anspruch 10, **dadurch gekennzeichnet, dass** die Mittel (ECU, 52) zur Erzeugung der zweiten Betätigungskraft wenigstens einen elektrischen, elektrohydraulischen oder elektropneumatischen Aktuator (52) beinhalten.

12. Ausrüstung nach Anspruch 11, **dadurch gekennzeichnet, dass** die Mittel (ECU, 52) zur Erzeugung der zweiten Betätigungskraft wenigstens eine elektro-pneumatische Magnetventileinrichtung (52) beinhalten, welche gesteuert von der zusätzlichen elektronischen Steuereinrichtung (FBM-ECU) zur Bildung der zweiten Betätigungskraft wenigstens einen pneumatischen Steuerdruck aussteuert, von welchem die zweite Betätigungskraft abhängig ist.

13. Ausrüstung nach Anspruch 12, **dadurch gekennzeichnet, dass** der von der wenigstens einen Magnetventileinrichtung (52) ausgesteuerte Steuerdruck mittels einer Sensorik gemessen und durch Abgleich mit einem Sollwert in der zusätzlichen elektronischen Steuereinrichtung (FBM-ECU) geregelt wird, wobei die Sensorik, die Magnetventileinrichtung (52) zusammen mit der zusätzlichen elektronischen Steuereinrichtung (FBM-ECU) einen Steuerdruckregler zur Regelung des pneumatischen Steuerdrucks bilden.

14. Ausrüstung nach Anspruch 12 oder 13, **dadurch gekennzeichnet, dass** der pneumatische Steuerdruck in wenigstens eine Steuerkammer (22) der elektropneumatischen Betriebsbremsventileinrichtung (1) einsteuerbar ist, welche von dem wenigstens einen Steuerkolben (12) begrenzt ist, wobei die Steuerkammer (22) derart angeordnet ist, dass sie bei Belüftung eine in Bezug zur ersten Betätigungskraft gleichsinnige oder gegensinnige zweite Betätigungskraft an dem wenigstens einen Steuerkolben (12) bewirkt.

15. Ausrüstung nach einem der vorhergehenden Ansprüche, **dadurch gekennzeichnet, dass** die Autopiloteinrichtung (70) oder das Fahrerassistenzsystem ohne Zutun des Fahrers die Bremswirkungsvorgabe direkt oder indirekt in die zusätzliche elektronische Steuereinrichtung (FBM-ECU) einsteuert, wobei die Bremswirkungsvorgabe in Abhängigkeit von Fahrbetriebsbedingungen erzeugt wird.

16. Ausrüstung nach einem der vorhergehenden Ansprüche, **dadurch gekennzeichnet, dass** wenigstens die elektronische Bremssteuereinrichtung (EBS/ABS-ECU) und die zusätzliche elektronische Steuereinrichtung (FBM-ECU) an einen Datenbus (122) angeschlossen sind.

17. Fahrzeug mit einer elektrischen Ausrüstung nach einem der vorhergehenden Ansprüche.

## Claims

1. Electrical equipment of a vehicle or a vehicle combination consisting of a towing vehicle and at least one trailer vehicle, wherein the electrical equipment includes a service braking device which can be electrically controlled by an electronic brake control device (EBS/ABS-ECU) and actuated by a pressurized medium, and a driver assistance system or an autopilot device (70) which automatically controls or regulates the service braking device independently of the driver in accordance with a braking action specification, wherein
a) at least one brake slip control (ABS) is integrated into the electronic brake control device (EBS/ABS-ECU), and wherein
b) the electronic brake control device (EBS/ABS-ECU) is supplied with electrical power from a first electrical power source (126), and wherein
c) at least one additional electronic control device (FBM ECU) is provided in relation to the electronic brake control device (EBS/ABS-ECU), which is supplied with electrical power from a second electrical power source (128) which is independent of the first electrical power source (126) of the electronic brake control device (EBS/ABS-ECU) and which controls a solenoid valve device (52) via which braking pressure can be input into wheel brake actuators (118, 120), and wherein
d) at least in the event of a detected fault or failure of the first electrical power source (126) and/or of the electronic brake control device (EBS/ABS-ECU), the additional electronic control device (FBM ECU) is actuated by the driver assistance system or by the autopilot device (70) in accordance with the braking action specification, in order to perform a redundantly triggered braking of the vehicle in motion or of the vehicle combination in motion by applying braking pressure to the wheel brake actuators (118, 120), and wherein
e) a sensor device (139) supplied with electrical power from the second electrical power source (128) is provided, with the aid of which an excessive brake slip can be detected during the redundantly triggered braking, and wherein
f) the additional electronic control device (FBM ECU) is further configured such that when it has detected an excessive brake slip during the redundantly triggered braking, it introduces a braking pressure into the wheel brake actuators (118, 120) by activating the solenoid valve device (52), which braking pressure corresponds to a braking effect which is less than the braking effect specification of the driver assistance system or the autopilot device (70), **characterized in that**
g) the sensor device (139) includes at least the following:
g1) at least one first sensor, which inputs a first value representing the longitudinal acceleration or longitudinal deceleration of the vehicle or vehicle combination into the additional electronic control device (FBM ECU), and at least one second sensor, which inputs a second value representing the braking pressure into the additional electronic control device (FBM ECU), wherein the additional electronic control device (FBM ECU) is configured such that during the redundantly triggered braking, it detects an excessive brake slip in the event of a deviation of a relation, a ratio or a correlation between the first value and the second value from an expected or predetermined relation, from an expected or predetermined ratio or from an expected or predetermined correlation between the first value and the second value which exceeds a permitted or predetermined deviation, and/or
g2) at least a third sensor, which inputs a third value representing the rotational speed of a transmission output shaft of a transmission of the vehicle or of the vehicle combination into the additional electronic control device (FBM ECU) and at least one fourth sensor which inputs a fourth value representing the wheel speed of at least one of the non-driven but braked wheels of the vehicle or of the vehicle combination into the additional electronic control device (FBM ECU), wherein the additional electronic control device (FBM ECU) is configured such during the redundantly triggered braking it detects an excessive brake slip in the presence of a deviation of a relation, a ratio or a correlation between the third value and the fourth value from an expected or predetermined relation, from an expected or predetermined ratio or from an expected or predetermined correlation between the third value and the fourth value which exceeds a permitted deviation, and/or
g3) at least a fifth sensor, which inputs a fifth value representing a braking pitch of the vehicle or the vehicle combination into the additional electronic control device (FBM ECU), and a sixth sensor which inputs a sixth value representing the longitudinal acceleration or longitudinal deceleration of the vehicle or the vehicle combination into the additional electronic control device (FBM ECU), wherein the additional electronic control device (FBM ECU) is formed such that during the redundantly triggered braking it detects an excessive brake slip in the presence of a deviation of a relation, a ratio or a correlation between the fifth value and the sixth value from an expected or predetermined relation, from an expected or predetermined ratio or from an expected or predetermined correlation between the fifth value and the sixthn value which exceeds a permitted deviation, and/or
g4) at least a seventh sensor, which inputs a seventh value representing an actual lateral movement of the vehicle or the vehicle combination into the additional electronic control device (FBM ECU), and at least one eighth sensor which inputs an eighth value representing a desired lateral movement of the vehicle or the vehicle combination into the additional electronic control device (FBM ECU), wherein the additional electronic control device (FBM ECU) is designed to detect an excessive brake slip during the redundantly triggered braking when a predetermined threshold is exceeded by the difference between the seventh value and the eighth value, wherein
h) the reduction of the braking effect relative to the braking effect specification includes alternating between reducing and increasing the braking pressure by controlling the solenoid valve device (52) by means of the additional electronic control device (FBM ECU), and wherein
i) the additional electronic control device (FBM ECU) is configured such that, within the framework of a first detection mode, it stores a first value for the braking pressure at which an excessive brake slip has occurred for the first time within the first detection mode as a first detected critical braking pressure value and then, by actuating the solenoid valve device (52) in cycles, increases the braking pressure only up to the first detected critical braking pressure value and then reduces it again, and wherein
j) the additional electronic control device (FBM ECU) is configured to perform at least a second detection mode after the first detection mode in order to store a second value for the braking pressure at which an excessive brake slip has occurred for the first time within the second detection mode as a second detected critical braking pressure value and then to increase the braking pressure in cycles only up to this second detected critical braking pressure value by actuating the solenoid valve device (52) and then to reduce it again.

2. Equipment according to claim 1, **characterized in that**
a) the first sensor includes a longitudinal acceleration sensor and the second sensor includes a pressure sensor,
b) the third sensor includes a speed sensor at the transmission output shaft and the fourth sensor includes a wheel speed sensor,
c) the fifth sensor includes a sensor directly or indirectly detecting a deflection of the vehicle or the vehicle combination and the sixth sensor includes a longitudinal acceleration sensor,
d) the seventh sensor includes a camera sensor and/or a radar sensor and the eighth sensor includes a speed sensor and a steering wheel angle sensor or a steering angle sensor.

3. Equipment according to any one of the preceding claims, **characterized in that** the additional electronic control device (FBM ECU) is configured such that if, during the redundantly triggered braking, it detects an excessive brake slip due to the presence of a deviation of a relation, a ratio or a correlation between the first value and the second value from an expected or predetermined relation exceeding a permitted or predetermined deviation, from an expected or predetermined ratio or from an expected or predetermined correlation between the first value and the second value, it firstly increases the braking pressure (p) by actuating the solenoid valve device (52) in a cyclic alternation to a maximum in accordance with the braking effect specification until the longitudinal deceleration (a ₓ) no longer increases further and has assumed a maximum value (aₘₐₓ) and then reduces the braking pressure (p) again until the longitudinal deceleration (a ₓ) decreases again.

4. Equipment according to any one of the preceding claims, **characterised in that** the additional electronic control device (FBM ECU) is configured to detect excessive brake slip during the redundantly triggered braking also on the basis of data which has already been transmitted to the additional electronic control device (FBM ECU) and stored in a memory before the occurrence of the fault or failure.

5. Equipment according to claim 4, **characterized in that** the data includes at least one of the following items of data: the mass of the vehicle or the vehicle combination, the axle loads and/or the axle load distribution of the vehicle or vehicle combination, the friction coefficient of the road travelled by the vehicle or the vehicle combination.

6. Equipment according to claim 5, **characterized in that** the additional electronic control device (FBM ECU) is configured to adjust the braking pressure on an axle-by-axle basis depending on the axle loads during the redundantly triggered braking.

7. Equipment according to any one of the preceding claims, **characterized in that** the additional electronic control device (FBM ECU) is configured such that it recognises the presence of its own brake slip control in a trailer vehicle coupled to the towing vehicle of a vehicle combination and in this case also uses the brake slip control of the trailer vehicle for brake slip-controlled braking of the vehicle combination during the redundantly triggered braking.

8. Equipment according to any one of the preceding claims, **characterized in that** the additional electronic control device (FBM ECU) is configured to additionally activate a retarder and/or reduce the drive power of a drive motor of the vehicle or the towing vehicle of the vehicle combination during the redundantly triggered braking.

9. Equipment according to any one of the preceding claims, **characterized in that** the electronic brake control device (EBS/ABS-ECU) is configured such that it detects, by self-monitoring, the occurrence of a fault affecting it or a failure affecting it and/or the occurrence of a fault or a failure of the first electrical power source (126) and reports it to the additional electronic control device (FBM ECU), or **in that** the additional electronic control device (FBM ECU) is configured such that it recognizes an occurrence of a fault or a failure of the first electrical power source (126) and/or of the electronic brake control device (EBS/ABS-ECU), or **in that** a further electronic device, different from the electronic brake control device (EBS/ABS-ECU) and from the additional electronic control device (FBM ECU), is configured to recognize an occurrence of a fault or a failure of the first electrical power source (126) and/or of the electronic brake control device (EBS/ABS-ECU) and to report it to the additional electronic control device (FBM ECU).

10. Equipment according to any one of the preceding claims, **characterized in that** an electropneumatic service braking device (124), in particular an electronic or electronically brake pressure-controlled braking system (EBS), is provided as the service braking device, which includes an electropneumatic service brake valve device (1), the electronic brake control device (EBS/ABS-ECU), electropneumatic modulators (114, 116) and pneumatic wheel brake actuators (118, 120), wherein
a) the electronic brake control device (EBS/ABS-ECU) electrically controls the electropneumatic modulators (114, 116) to generate pneumatic brake pressures or brake control pressures for pneumatic wheel brake actuators (118, 120) on an individual wheel, individual axle or individual side basis, and wherein
b) the electropneumatic service brake valve device (1) has a service brake actuator (10) and, within at least one electric service brake circuit, at least one electric channel (130) with at least one electric brake value transmitter (67), which can be actuated by the service brake actuator (10), for outputting actuation signals as a function of actuation of the service brake actuator (10), and the additional electronic control device (FBM-ECU) which receives the actuation signals and, depending on the actuation signals, inputs brake request signals into the electronic brake control device (EBS/ABS-ECU), and within at least one pneumatic service brake circuit at least one pneumatic channel (132, 134), in which at least one control piston (12) of the service brake valve device (1) is loaded with a first actuating force by actuation of the service brake actuator (10) due to a driver brake request and the control piston (12) directly or indirectly controls at least one double-seat valve (34) of the service brake valve device (1) comprising an inlet seat (64) and an outlet seat (32), to generate pneumatic brake pressures or brake control pressures for the pneumatic wheel brake actuators (118, 120), and wherein
c) means (FBM-ECU, 52) including the additional electronic control device (FBM-ECU) of the electropneumatic service brake valve device (1) are provided for generating a second actuating force independently of a driver's brake request, which force acts in the same or opposite direction on the at least one control piston (12) in relation to the first actuating force when a brake request independent of the driver's request is present.

11. Equipment according to claim 10, **characterized in that** the means (ECU, 52) for generating the second actuating force comprise at least one electric, electrohydraulic or electropneumatic actuator (52).

12. Equipment according to claim 11, **characterized in that** the means (ECU, 52) for generating the second actuating force comprise at least one electro-pneumatic solenoid valve device (52) which, controlled by the additional electronic control device (FBM- ECU), actuates at least one pneumatic control pressure to form the second actuating force, on which the second actuating force is dependent.

13. Equipment according to claim 12, **characterized in that** the control pressure controlled by the at least one solenoid valve device (52) is measured by means of a sensor and regulated by comparison with a setpoint value in the additional electronic control device (FBM-ECU), wherein the sensor, the solenoid valve device (52) together with the additional electronic control device (FBM-ECU) form a control pressure regulator for regulating the pneumatic control pressure.

14. Equipment according to claim 12 or 13, **characterized in that** the pneumatic control pressure can be input into at least one control chamber (22) of the electropneumatic service brake valve device (1), which is delimited by the at least one control piston (12), wherein the control chamber (22) is arranged in such a way that, when released, it causes a second actuating force at the at least one control piston (12) which is in the same or opposite direction to the first actuating force.

15. Equipment according to any one of the preceding claims, **characterized in that** the autopilot device (70) or the driver assistance system directly or indirectly inputs the braking effect specification into the additional electronic control device (FBM- ECU) without the driver's intervention, wherein the braking effect specification is generated as a function of driving operating conditions.

16. Equipment according to any one of the preceding claims, **characterized in that** at least the electronic brake control device (EBS/ABS-ECU) and the additional electronic control device (FBM-ECU) are connected to a databus (122).

17. Vehicle comprising electrical equipment according to any one of the preceding claims.

## Revendications

1. Équipement électrique d'un véhicule ou d'une combinaison de véhicule composée d'un véhicule tracteur et d'au moins un véhicule tracté, dans lequel l'équipement électrique contient un dispositif de frein de service actionné par un fluide sous pression et commandable électriquement par un dispositif électronique de commande de freinage (EBS/ABS-ECU) et un système d'aide à la conduite ou un dispositif de pilotage automatique (70), système ou dispositif qui commande ou régule automatiquement le dispositif de frein de service indépendamment du conducteur selon une consigne d'action de freinage, dans lequel
a) au moins un système antiblocage des roues (ABS) est intégré dans le dispositif électronique de commande de freinage (EBS/ABS-ECU), et dans lequel
b) le dispositif électronique de commande de freinage (EBS/ABS-ECU) est alimenté par une première source d'énergie électrique (126) en énergie électrique, et dans lequel
c) au moins un dispositif de commande électronique (FBM ECU) supplémentaire par rapport au dispositif électronique de commande de freinage (EBS/ABS-ECU) est prévu, lequel est alimenté par une seconde source d'énergie électrique (128) indépendante de la première source d'énergie électrique (126) du dispositif électronique de commande de freinage (EBS/ABS- ECU) en énergie électrique et lequel commande un dispositif de soupape magnétique (52), par le biais duquel une pression de freinage peut être commandée dans des actionneurs de frein de roue (118, 120), et dans lequel
d) au moins en cas d'erreur ou de défaillance constatée de la première source d'énergie électrique (126) et/ou du dispositif électronique de commande de freinage (EBS/ABS-ECU), le dispositif de commande électronique supplémentaire (FBM ECU) est commandé par le système d'aide à la conduite ou par le dispositif de pilotage automatique (70) selon la consigne d'action de freinage afin de réaliser un freinage déclenché de manière redondante du véhicule se trouvant en marche ou de la combinaison de véhicule se trouvant en marche, par la commande de la pression de freinage dans les actionneurs de frein de roue (118, 120), et dans lequel
e) un dispositif de détection (139) alimenté en énergie électrique par la seconde source d'énergie électrique (128) est prévu, à l'aide duquel un blocage des roues excessif peut être détecté pendant le freinage déclenché de manière redondante, et dans lequel
f) le dispositif de commande électronique supplémentaire (FBM ECU) est en outre réalisé afin que lorsqu'il a détecté pendant le freinage déclenché de manière redondante un blocage des roues excessif, il commande par commande du dispositif de soupape magnétique (52) une pression de freinage dans les actionneurs de frein de roue (118, 120) qui correspond à une action de freinage qui est plus faible que la consigne d'action de freinage du système d'aide à la conduite ou du dispositif de pilotage automatique (70), **caractérisé en ce que**
g) le dispositif de détection (139) contient au moins ce qui suit :
g1) au moins un premier capteur qui commande une première valeur représentant l'accélération longitudinale ou la décélération longitudinale du véhicule ou de la combinaison de véhicule dans le dispositif de commande électronique supplémentaire (FBM ECU) ainsi qu'au moins un deuxième capteur qui commande une deuxième valeur représentant la pression de freinage dans le dispositif de commande électronique supplémentaire (FBM ECU), dans lequel le dispositif de commande électronique supplémentaire (FBM ECU) est réalisé afin qu'il détecte pendant le freinage déclenché de manière redondante un blocage des roues excessif en présence d'un écart dépassant un écart permis ou prescrit d'une relation, d'un rapport ou d'un lien entre la première valeur et la deuxième valeur d'une relation attendue ou prescrite, d'un rapport attendu ou prescrit ou d'un lien attendu ou prescrit entre la première valeur et la deuxième valeur, et/ou
g2) au moins un troisième capteur qui commande une troisième valeur représentant la vitesse de rotation d'un arbre de sortie de transmission d'une transmission du véhicule ou de la combinaison de véhicule dans le dispositif de commande électronique supplémentaire (FBM ECU) et au moins un quatrième capteur qui commande une quatrième valeur représentant la vitesse de rotation de roue au moins d'une des roues non entraînées mais freinées du véhicule ou de la combinaison de véhicule dans le dispositif de commande électronique supplémentaire (FBM ECU), dans lequel le dispositif de commande électronique supplémentaire (FBM ECU) est réalisé afin qu'il détecte pendant le freinage déclenché de manière redondante un blocage des roues excessif en présence d'un écart dépassant un écart permis d'une relation, d'un rapport ou d'un lien entre la troisième valeur et la quatrième valeur d'une relation attendue ou prescrite, d'un rapport attendu ou prescrit ou d'un lien attendu ou prescrit entre la troisième valeur et la quatrième valeur, et/ou
g3) au moins un cinquième capteur qui commande une cinquième valeur représentant une plongée au freinage du véhicule ou de la combinaison de véhicule dans le dispositif de commande électronique supplémentaire (FBM ECU), ainsi qu'un sixième capteur qui commande une sixième valeur représentant l'accélération longitudinale ou décélération longitudinale du véhicule ou de la combinaison de véhicule dans le dispositif de commande électronique supplémentaire (FBM ECU), dans lequel le dispositif de commande électronique supplémentaire (FBM ECU) est réalisé afin qu'il détecte pendant le freinage déclenché de manière redondante un blocage des roues excessif en présence d'un écart dépassant un écart permis d'une relation, d'un rapport ou d'un lien entre la cinquième valeur et la sixième valeur d'une relation attendue ou prescrite, d'un rapport attendu ou prescrit ou d'un lien attendu ou prescrit entre la cinquième valeur et la sixième valeur, et/ou
g4) au moins un septième capteur qui commande une septième valeur représentant un déplacement latéral réel du véhicule ou de la combinaison de véhicule dans le dispositif de commande électronique supplémentaire (FBM ECU), ainsi qu'au moins un huitième capteur qui commande une huitième valeur représentant un déplacement latéral de consigne du véhicule ou de la combinaison de véhicule dans le dispositif de commande électronique supplémentaire (FBM ECU), dans lequel le dispositif de commande électronique supplémentaire (FBM ECU) est réalisé afin qu'il détecte pendant le freinage déclenché de manière redondante un blocage des roues excessif en cas de dépassement d'un seuil prédéterminé par la différence entre la septième valeur et la huitième valeur, dans lequel
h) la réduction de l'action de freinage par rapport à la consigne d'action de freinage contient un changement entre la réduction et l'augmentation de la pression de freinage par commande du dispositif de soupape magnétique (52) au moyen du dispositif de commande électronique supplémentaire (FBM ECU), et dans lequel
i) le dispositif de commande électronique supplémentaire (FBM ECU) est réalisé afin qu'il enregistre dans le cadre d'un premier mode de reconnaissance une première valeur pour la pression de freinage, pour laquelle un blocage des roues excessif est survenu la première fois dans le premier mode de reconnaissance comme première valeur de pression de freinage critique reconnue et ensuite augmente par commande du dispositif de soupape magnétique (52) par cycles la pression de freinage uniquement jusqu'à la première valeur de pression de freinage critique reconnue et ensuite la réduise de nouveau, et dans lequel
i) le dispositif de commande électronique supplémentaire (FBM ECU) est réalisé afin qu'il réalise temporairement après le premier mode de reconnaissance au moins un second mode de reconnaissance afin d'enregistrer une deuxième valeur pour la pression de freinage, pour laquelle un blocage des roues excessif est survenu la première fois dans le second mode de reconnaissance comme deuxième valeur de pression de freinage critique reconnue et ensuite d'augmenter par commande du dispositif de soupape magnétique (52) par cycles la pression de freinage juste jusqu'à cette deuxième valeur de pression de freinage critique reconnue et ensuite de la réduire de nouveau.

2. Procédé selon la revendication 1, caractérisé en ceque
a) le premier capteur contient un capteur d'accélération longitudinale et le deuxième capteur contient un capteur de pression,
b) le troisième capteur contient un capteur de vitesse de rotation au niveau de l'arbre de sortie de transmission et le quatrième capteur contient un capteur de vitesse de rotation de roue,
c) le cinquième capteur contient un capteur détectant directement ou indirectement une compression du ressort du véhicule ou de la combinaison de véhicule et le sixième capteur contient un capteur d'accélération longitudinale,
d) le septième capteur contient un capteur de caméra et/ou un capteur de radar et le huitième capteur contient un capteur de vitesse et un capteur d'angle de volant ou un capteur d'angle de direction.

3. Équipement selon l'une quelconque des revendications précédentes, **caractérisé en ce que** le dispositif de commande électronique supplémentaire (FBM ECU) est réalisé afin qu'au cas où il détecte pendant le freinage déclenché de manière redondante un blocage des roues excessif par la présence d'un écart dépassant un écart permis ou prédéfini d'une relation, d'un rapport ou d'un lien entre la première valeur et la deuxième valeur d'une relation attendue ou prescrite, d'un rapport attendu ou prescrit ou d'un lien attendu ou prescrit entre la première valeur et la deuxième valeur, il augmente par la commande du dispositif de soupape magnétique (52) dans un changement cyclique la pression de freinage (p) tout d'abord jusqu'au maximum selon la consigne d'action de freinage, jusqu'à ce que la décélération longitudinale (aₓ) n'augmente plus davantage et a adopté une valeur maximale (aₘₐₓ) et ensuite diminue la pression de freinage (p) de nouveau jusqu'à ce que la décélération longitudinale (aₓ) diminue de nouveau.

4. Équipement selon l'une quelconque des revendications précédentes, **caractérisé en ce que** le dispositif de commande électronique supplémentaire (FBM ECU) est réalisé afin qu'il détecte pendant le freinage déclenché de manière redondante un blocage des roues excessif aussi sur la base de données qui ont déjà été transmises avant la survenue de l'erreur ou de la défaillance au dispositif de commande électronique supplémentaire (FBM ECU) et enregistrées dans une mémoire.

5. Équipement selon la revendication 4, **caractérisé en ce**que les données contiennent au moins une des données suivantes : la masse du véhicule ou de la combinaison de véhicule, les charges des essieux et/ou la répartition de charge des essieux du véhicule ou de la combinaison de véhicule, le coefficient de friction de la chaussée empruntée par le véhicule ou la combinaison de véhicule.

6. Équipement selon la revendication 5, **caractérisé en ce que** le dispositif de commande électronique supplémentaire (FBM ECU) est réalisé afin qu'il adapte par essieu pendant le freinage déclenché de manière redondante la pression de freinage en fonction des charges des essieux.

7. Équipement selon l'une quelconque des revendications précédentes, **caractérisé en ce**que le dispositif de commande électronique supplémentaire (FBM ECU) est réalisé afin qu'il reconnaisse une présence d'un propre système antiblocage des roues dans un véhicule tracté couplé au véhicule tracteur d'une combinaison de véhicule et dans ce cas pendant le freinage déclenché de manière redondante, utilise aussi le système antiblocage des roues du véhicule tracté pour le freinage avec antiblocage des roues de la combinaison de véhicule.

8. Équipement selon l'une quelconque des revendications précédentes, **caractérisé en ce**que le dispositif de commande électronique supplémentaire (FBM ECU) est réalisé afin qu'il réalise pendant le freinage déclenché de manière redondante en outre une activation d'un retardateur et/ou une réduction de la puissance d'entraînement d'un moteur d'entraînement du véhicule ou du véhicule tracteur de la combinaison.

9. Équipement selon l'une quelconque des revendications précédentes, **caractérisé en ce**que le dispositif électronique de commande de freinage (EBS/ABS-ECU) est réalisé afin qu'il reconnaisse par une propre surveillance une survenue d'une erreur le concernant ou d'une défaillance le concernant et/ou une survenue d'une erreur ou d'une défaillance de la première source d'énergie électrique (126) et la signale au dispositif de commande électronique supplémentaire , ou que le dispositif de commande électronique supplémentaire (FBM ECU) est réalisé afin qu'il reconnaisse une survenue d'une erreur ou d'une défaillance de la première source d'énergie électrique (126) et/ou du dispositif électronique de commande de freinage (EBS/ABS-ECU), ou qu'une autre électronique différente du dispositif électronique de commande de freinage (EBS/ABS-ECU) et du dispositif de commande électronique supplémentaire (FBM ECU) est réalisée afin qu'elle reconnaisse une survenue d'une erreur ou d'une défaillance de la première source d'énergie électrique (126) et/ou du dispositif électronique de commande de freinage (EBS/ABS-ECU) et la signale au dispositif de commande électronique supplémentaire (FBM ECU).

10. Équipement selon l'une quelconque des revendications précédentes, **caractérisé en ce**qu'un dispositif de frein de service (124) électropneumatique, en particulier un système de freinage (EBS) électronique ou à régulation de pression de freinage de manière électronique est prévu comme dispositif de frein de service, système qui contient un dispositif de soupape de frein de service (1) électropneumatique, le dispositif électronique de commande de freinage (EBS/ABS-ECU), des modulateurs électropneumatiques (114, 116) ainsi que des actionneurs de frein de roue pneumatiques (118, 120), dans lequel
a) le dispositif électronique de commande de freinage (EBS/ABS-ECU) commande électriquement les modulateurs électropneumatiques (114, 116) afin de générer des pressions de freinage ou pressions de commande de frein pneumatiques pour des actionneurs de frein de roue pneumatiques (118, 120) de manière propre à chaque roue, à chaque essieu ou à chaque côté, et dans lequel
b) le dispositif de soupape de frein de service électropneumatique (1) présente un organe d'actionnement de frein de service (10) ainsi que dans au moins un circuit de frein de service électrique, au moins un canal électrique (130) avec au moins un capteur de valeur de frein (67) électrique actionnable par l'organe d'actionnement de frein de service (10) pour le réglage dépendant d'un actionnement de l'organe d'actionnement de frein de service (10) de signaux d'actionnement, ainsi que le dispositif de commande électronique supplémentaire (FBM-ECU) recevant les signaux d'actionnement qui commande, en fonction des signaux d'actionnement, des signaux d'exigence de freinage dans le dispositif électronique de commande de freinage (EBS/ABS-ECU), ainsi que dans au moins un circuit de frein de service pneumatique, au moins un canal pneumatique (132, 134), pour lequel par actionnement de l'organe d'actionnement de frein de service (10) en raison d'une exigence de freinage du conducteur, au moins un piston de commande (12) du dispositif de soupape de frein de service (1) est chargé avec une première force d'actionnement et le piston de commande (12) commande directement ou indirectement une soupape double siège (34) du dispositif de soupape de frein de service (1) contenant un siège d'entrée (64) et un siège de sortie (32) afin de générer des pressions de frein ou pressions de commande de frein pneumatiques pour les actionneurs de frein de roue (118, 120) pneumatiques, et dans lequel
c) des moyens (FBM-ECU, 52) contenant le dispositif de commande électronique supplémentaire (FBM-ECU) du dispositif de soupape de frein de service électropneumatique (1) sont prévus pour la génération d'une seconde force d'actionnement indépendamment d'une exigence de freinage du conducteur, qui agit en présence d'une exigence de freinage indépendante du souhait du conducteur par rapport à la première force d'actionnement dans le même sens ou le sens inverse sur l'au moins un piston de commande (12).

11. Équipement selon la revendication 10, **caractérisé en ce**que les moyens (ECU, 52) contiennent pour la génération de la seconde force d'actionnement au moins un actionneur (52) électrique, électrohydraulique ou électropneumatique (52).

12. Équipement selon la revendication 11, **caractérisé en ce**que les moyens (ECU, 52) contiennent pour la génération de la seconde force d'actionnement au moins un dispositif de soupape magnétique électropneumatique (52) qui règle en étant commandé par le dispositif de commande électronique supplémentaire (FBM- ECU) pour la formation de la seconde force d'actionnement au moins une pression de commande pneumatique, de laquelle la seconde force d'actionnement dépend.

13. Équipement selon la revendication 12, **caractérisé en ce**que la pression de commande réglée par l'au moins un dispositif de soupape magnétique (52) est mesurée au moyen d'un système de détection et est régulée par comparaison avec une valeur de consigne dans le dispositif de commande électronique supplémentaire (FBM-ECU), dans lequel le système de détection, le dispositif de soupape magnétique (52) forment conjointement avec le dispositif de commande électronique supplémentaire (FBM- ECU) un régulateur de pression de commande pour la régulation de la pression de commande pneumatique.

14. Équipement selon la revendication 12 ou 13, **caractérisé en ce**que la pression de commande pneumatique peut être commandée dans au moins une chambre de commande (22) du dispositif de soupape de frein de service (1) électropneumatique, qui est délimité par l'au moins un piston de commande (12), dans lequel la chambre de commande (22) est agencée de telle manière qu'elle provoque lors de la ventilation une seconde force d'actionnement dans le même sens ou le sens inverse par rapport à la première force d'actionnement au niveau de l'au moins un piston de commande (12).

15. Équipement selon l'une quelconque des revendications précédentes, **caractérisé en ce que** le dispositif de pilotage automatique (70) ou le système d'aide à la conduite commande directement ou indirectement sans action du conducteur la consigne d'action de freinage dans le dispositif de commande électronique supplémentaire (FBM- ECU), dans lequel la consigne d'action de freinage est générée en fonction de conditions de conduite.

16. Équipement selon l'une quelconque des revendications précédentes, **caractérisé en ce qu'**au moins le dispositif de commande de freinage électronique (EBS/ABS-ECU) et le dispositif de commande électronique supplémentaire (FBM-ECU) sont raccordés à un bus de données.

17. Véhicule avec un équipement électrique selon l'une quelconque des revendications précédentes.
